# EUROPEAN PATENT SPECIFICATION

(11) **EP 1 808 473 B1**
(45) Date of publication and mention of the grant of the patent: **10.02.2010**
(21) Application number: 06026418.1
(22) Date of filing: 20.12.2006
(51) Int. Cl.: C09K 19/46, C09K 19/30, C09K 19/34

(54) **Liquid crystal medium**
Flüssigkristallines Medium
Milieu liquide cristallin

(30) Priority: 13.01.2006 EP 06000714
(43) Date of publication of application: 18.07.2007
(73) Proprietor: Merck Patent GmbH, 64293 Darmstadt (DE)
(72) Inventor: Ichinose, Hideo, Odawara-shi Kanagawa Pref. 250-0034 (JP); Okamura, Masahiko, Atsugi City Kanagawa-Pref. 243-0807 (JP); Nakajima, Shinji, Atsugi-shi Kanagawa Pref. 243-0816 (JP); Takeda, Takanori, Tumadakita Atsugi-shi Kanagawa Pref. 243-0031 (JP)

(56) References cited:
- WO-A-2004/048501
- WO-A-2005/017067
- US-B2- 6 902 777

## Description

The present invention relates to a liquid crystal medium, to its use for electro-optical purposes, and to displays containing this medium.

Liquid crystals are used principally as dielectrics in display devices, since the optical properties of such substances can be modified by an applied voltage. Electro-optical devices based on liquid crystals are extremely well known to the person skilled in the art and can be based on various effects. Examples of such devices are cells having dynamic scattering, DAP (deformation of aligned phases) cells, guest/host cells, TN cells having a twisted nematic structure, STN (supertwisted nematic) cells, SBE (super-birefringence effect) cells and OMI (optical mode interference) cells. The commonest display devices are based on the Schadt-Helfrich effect and have a twisted nematic structure.

The liquid crystal materials must have good chemical and thermal stability and good stability to electric fields and electromagnetic radiation. Also, the liquid crystal materials should have low viscosity and produce short addressing times, low threshold voltages and high contrast in the cells.

They should furthermore have a suitable mesophase, for example a nematic or cholesteric mesophase for the above-mentioned cells, at the usual operating temperatures, i.e. in the broadest possible range above and below room temperature. Since liquid crystals are generally used as mixtures of a plurality of components, it is important that the components are readily miscible with one another. Further properties, such as the electrical conductivity, the dielectric anisotropy and the optical anisotropy, have to satisfy various requirements depending on the cell type and area of application. For example, materials for cells having a twisted nematic structure should have positive dielectric anisotropy and low electrical conductivity.

For example, for matrix liquid crystal displays with integrated non-linear elements for switching individual pixels (MLC displays), media having large positive dielectric anisotropy, broad nematic phases, relatively low birefringence, very high specific resistance, good UV and temperature stability and low vapour pressure are desired.

Matrix liquid crystal displays of this type are known. Non-linear elements which can be used for individual switching of the individual pixels are, for example, active elements (i.e. transistors). The term "active matrix" is then used, where a distinction can be made between two types:
1. MOS (metal oxide semiconductor) or other diodes on a silicon wafer as substrate.
2. Thin-film transistors (TFTs) on a glass plate as substrate.

The use of single-crystal silicon as substrate material restricts the display size, since even modular assembly of various part-displays results in problems at the joins.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The TFT displays usually operate as TN cells with crossed polarisers in transmission and are illuminated from the back.

The term MLC displays here covers any matrix display with integrated non-linear elements, i.e., besides the active matrix, also displays with passive elements, such as varistors or diodes (MIM = metal-insulator-metal).

MLC displays of this type are particularly suitable for TV applications (for example pocket TVs) or for high-information displays for computer applications (laptops) and in automobile or aircraft construction. Besides problems regarding the angle dependence of the contrast and the response times, difficulties also arise in MLC displays due to insufficiently high specific resistance of the liquid crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. With decreasing resistance, the contrast of an MLC display deteriorates, and the problem of after-image elimination may occur. Since the specific resistance of the liquid crystal mixture generally drops over the life of an MLC display owing to interaction with the interior surfaces of the display, a high (initial) resistance is very important in order to obtain acceptable service lives. In particular in the case of low-volt mixtures, it was hitherto impossible to achieve very high specific resistance values. It is furthermore important that the specific resistance exhibits the smallest possible increase with increasing temperature and after heating and/or UV exposure. The low-temperature properties, in particular the so-called "low temperature stability" (LTS) of the mixtures from the prior art are also particularly disadvantageous. It is demanded that no crystallisation and/or smectic phases occur, even at low temperatures, and the temperature dependence of the viscosity is as low as possible. The MLC displays from the prior art thus do not meet today's requirements.

There thus continues to be a great demand for MLC displays having very high specific resistance at the same time as a large working-temperature range, short response times even at low temperatures and low threshold voltage which do not have these disadvantages, or only do so to a reduced extent.

In TN (Schadt-Helfrich) cells, media are desired which facilitate the following advantages in the cells:
- extended nematic phase range (in particular down to low temperatures)
- the ability to switch at extremely low temperatures (outdoor use, automobile, avionics)
- increased resistance to UV radiation (longer service life).

The media available from the prior art do not allow these advantages to be achieved while simultaneously retaining the other parameters.

The document US 6,902,777 B2 discloses in example 11 a liquid crystal medium with some compounds identical or similar to those comprised in the claimed invention. The media include cyano compounds. The document WO 2004/048501 A1 discloses liquid crystal compounds comprising a tetrahydropyrane ring and a linking group -CF₂O-. The document WO 2005/017067 A1 discloses a liquid crystalline medium comprising tetrahydropyrane compounds analogous to those used within the current invention.

In the case of supertwisted (STN) cells, media are desired which enable greater multiplexability and/or lower threshold voltages and/or broader nematic phase ranges (in particular at low temperatures). To this end, a further widening of the available parameter latitude (clearing point, smectic-nematic transition or melting point, viscosity, dielectric parameters, elastic parameters) is urgency desired.

For TV and monitor applications, media are desired which have a fast response time and a low threshold voltage, furthermore a good low temperature stability are required. Also, depending on the thickness of the switchable LC layer, a high birefringence may be required.

The present invention thus has the object of providing media, in particular for MLC, TN or STN displays of this type, which do not have the above-mentioned disadvantages or only do so to a reduced extent, and preferably simultaneously have very high specific resistances, low threshold voltages, an improved LTS and fast switching times.

It has now been found that this object can be achieved if media according to the invention are used in displays.

The present invention thus relates to a liquid crystal medium based on a mixture of polar compounds, characterised in that it comprises one or more compounds of formula IA and one or more compounds of formula IB 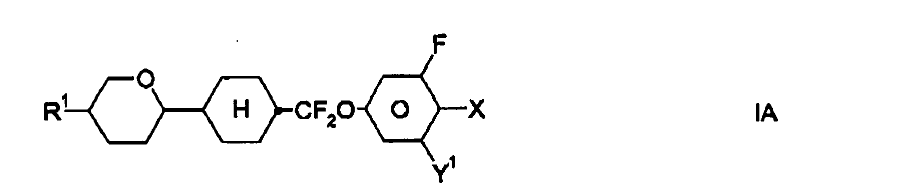 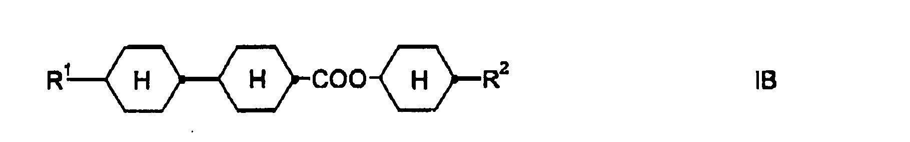 wherein
- R¹ and R²: are each, independently of one another, an alkyl radical having from 1 to 12 carbon atoms which is unsubstituted, monosubstituted by CN or CF₃ or at least monosubstituted by halogen, wherein one or more CH₂ groups are optionally, in each case independently of one another, replaced by -O-, -S-, 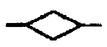 , -CH=CH-, -C≡C-, -CO-, -CO-O-, -O-CO- or -O-CO-O- in such a way that O atoms are not linked directly to one another,
- Y¹: is H or F,
- X: is F, Cl or a halogenated alkyl, alkenyl, alkoxy or alkenyloxy radical having up to 6 carbon atoms,
wherein the medium contains no compounds comprising a cyano group.

In the pure state, the compounds of the formulae IA and IB are colourless and form liquid crystalline mesophases in a temperature range which is favourably located for electro-optical use. They are stable chemically, thermally and to light.

R¹ and R² in formula IA and IB are preferably straight-chain alkyl or alkoxy with 1 to 12, very preferably 2,3, 4, 5, 6 or 7 C-atoms.

X in formula IA is preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃ or CH=CF₂, most preferably F or OCF₃.

Especially preferred compounds of formula IA are those selected of the following formulae 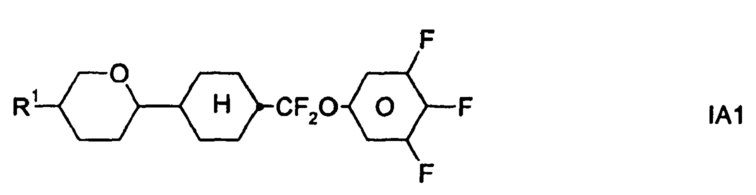 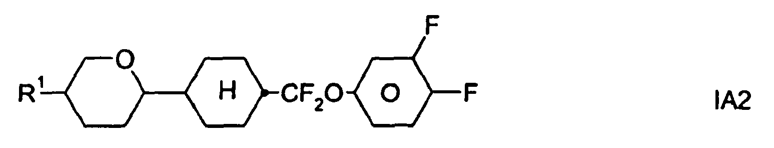 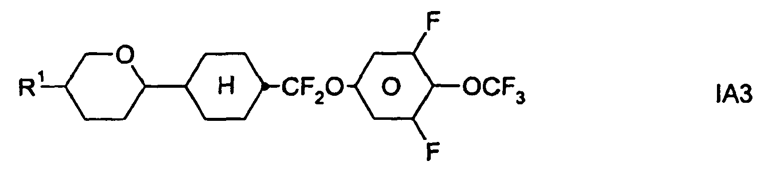 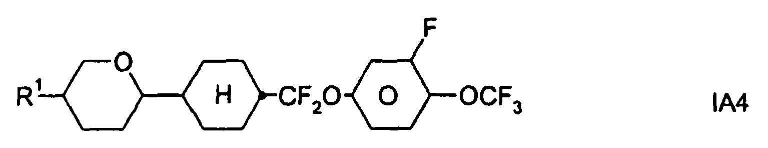 wherein R¹ has the meaning given in formula lA. Very preferred are compounds of formula IA1.

Especially preferred compounds of formula IB are those wherein R¹ and R² are selected from straight-chain alkyl with 2, 3, 4, 5 or 6 C-atoms.

The compounds of the formulae IA and IB are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants which are known per se, but are not mentioned here in greater detail.

The invention also relates to electro-optical displays (in particular STN or MLC displays having two plane-parallel outer plates, which, together with a frame, form a cell, integrated non-linear elements for switching individual pixels on the outer plates, and a nematic liquid crystal mixture of positive dielectric anisotropy and high specific resistance which is located in the cell) which contain media of this type, and to the use of these media for electro-optical purposes. Besides for reflective displays, the mixtures according to the invention are also suitable for IPS (in plane switching) applications, OCB (optically controlled birefringence) applications and VA (vertical alignment) applications.

The liquid crystal mixtures according to the invention enable a significant widening of the available parameter latitude. Especially, it was found that by using liquid crystal mixtures comprising compounds of formula IA and IB, it is possible to obtain mixtures having a low threshold voltage and an improved LTS, especially at temperatures of-20°C or lower, in particular - 40°C or lower.

The achievable combinations of clearing point, rotational viscosity γ₁ low Δn and dielectric anisotropy are far superior to previous materials from the prior art.

The requirement for a high clearing point, a nematic phase at low temperature and a high positive Δε has hitherto only been achieved to an inadequate extent. Although there are prior art mixtures, like for example MLC-6424, that have high positive Δε, they only have a low value of the clearing point and a high value for the rotational viscosity γ₁. Other mixture systems have good flow viscosities ν₂₀ and Δε values, but only have clearing points in the region of 60°C.

The birefringence of the mixtures according to the invention at 20°C is preferably 0.075 or higher, very preferably from 0.075 to 0.10, most preferably from 0.075 to 0.09.

The liquid crystal mixtures according to the invention, while retaining the nematic phase down to -20°C, preferably down to -30°C and particularly preferably down to -40°C, enable clearing points above 80°C, preferably above 85°C, simultaneously dielectric anisotropy values Δε of ≥ 8, preferably ≥ 10, very preferably ≥ 15, and a high value for the specific resistance to be achieved, enabling excellent STN and MLC displays to be obtained. In particular, the mixtures are characterised by low operating voltages. The TN thresholds are below 2.0 V, preferably below 1.7 V, particularly preferably below 1.5 V.

It goes without saying that, through a suitable choice of the components of the mixtures according to the invention, it is also possible for higher clearing points (for example above 110°) to be achieved at a higher threshold voltage or lower clearing points to be achieved at lower threshold voltages with retention of the other advantageous properties. At viscosities correspondingly increased only slightly, it is likewise possible to obtain mixtures having greater Δε and thus lower thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975] are used, where, besides particularly favourable electro-optical properties, such as, for example, high steepness of the characteristic line and low angle dependence of the contrast (German Patent 30 22 818), a lower dielectric anisotropy is sufficient at the same threshold voltage as in an analogous display at the second minimum. This enables significantly higher specific resistances to be achieved using the mixtures according to the invention at the first minimum than in the case of mixtures comprising cyano compounds. Through a suitable choice of the individual components and their proportions by weight, the person skilled in the art is able to set the birefringence necessary for a pre-specified layer thickness of the MLC display using simple routine methods.

The flow viscosity ν₂₀ at 20°C is preferably < 60 mm²·s⁻¹, particularly preferably < 50 mm²·s⁻¹. The rotational viscosity γ₁ of the mixtures according to the invention at 20°C is preferably < 250 mPa·s, particularly preferably < 210 mPa·s. The nematic phase range is preferably at least 90°C, particularly preferably at least 100°C. This range preferably extends at least from -20°C to +80°C.

Measurements of the capacity holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that mixtures according to the invention comprising compounds of the formula I exhibit a significantly smaller decrease in the HR with increasing temperature than, for example, analogous mixtures comprising cyanophenylcyclohexanes of the formula 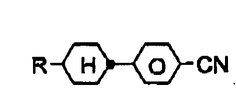 or esters of the formula 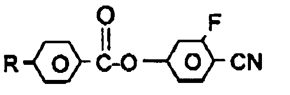 instead of the compounds of the formula I according to the invention.

The UV stability of the mixtures according to the invention is also considerably better, i.e. they exhibit a significantly smaller decrease in the HR on exposure to UV.

The media according to the invention contain no compounds comprising a cyano group. The values of the Holding Ratio of the media according to the present invention are preferably > 98 %, very preferably > 99 % at 20 °C.

In liquid crystal display devices short switching times are especially preferred, in particular when used in video and TV applications. For these applications switching times (tₒₙ + t_{off}) below 25 ms are needed. The upper limit of the switching time is determined by the repeating rate of the picture.

Preferred embodiments the present invention are indicated below:
- The medium additionally comprises one or more compounds selected from the group consisting of the general formulae II to VII: 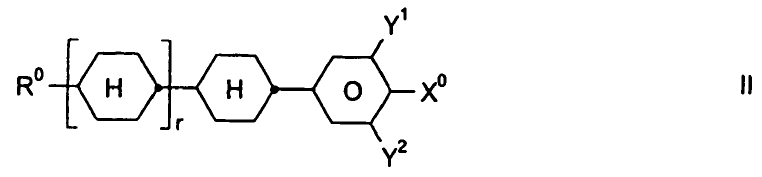 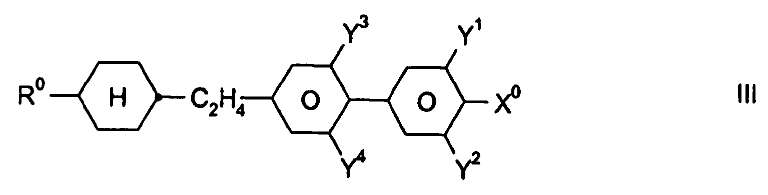 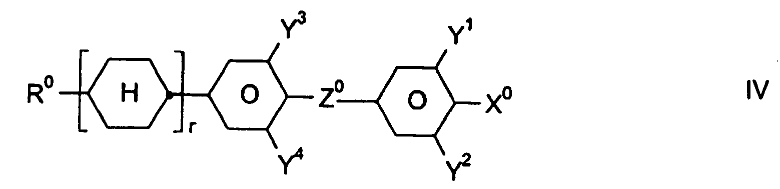 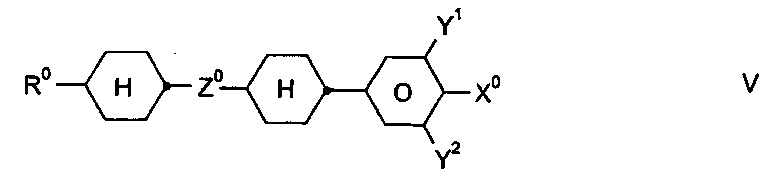 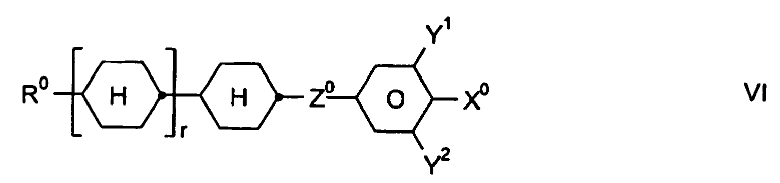 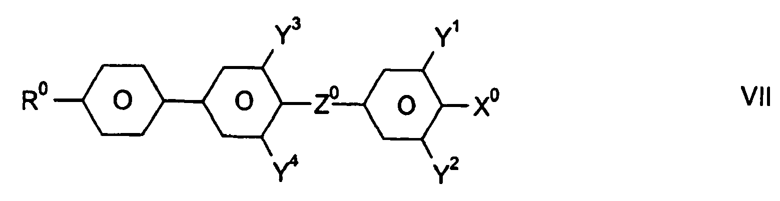 in which the individual radicals have the following meanings:
   - R⁰:: n-alkyl, alkoxy, oxaalkyl, fluoroalkyl or alkenyl, each having up to 9 carbon atoms,
   - X⁰:: F, Cl, halogenated alkyl, halogenated alkenyl, halogenated alkenyloxy or halogenated alkoxy having from 1 to 6 carbon atoms,
   - Z⁰:: -C₂H₄-, -(CH₂)₄-, -CH=CH-, -CF=CF-, -C₂F₄-, -CH₂CF₂-, - CF₂CH₂-, -CH₂O-, -OCH₂-, -COO-, -OCF₂- or -CF₂O-,
   - Y¹ to Y⁴:: each independently of one another H or F,
   - r:: 0 or 1;
- The compounds of formula II are preferably selected of the following formulae 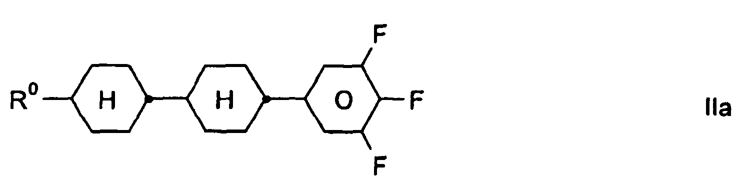 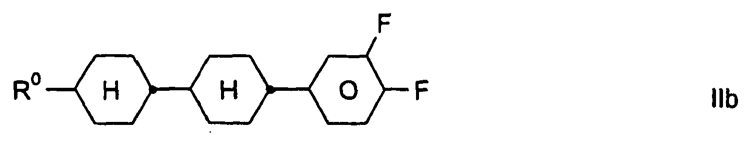 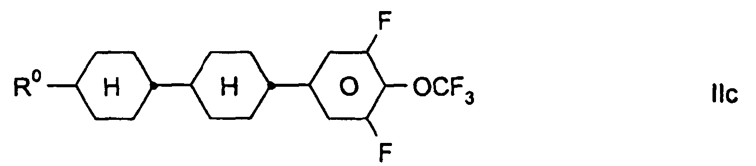 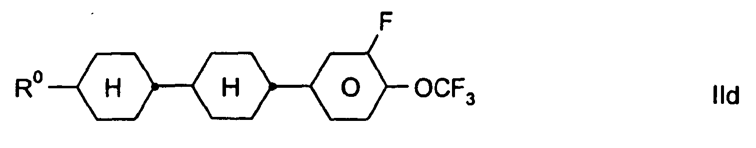 wherein R⁰ has the meaning given in formula II. Especially preferred are compounds of formula IIa.
- The compounds of formula IV are preferably selected of the following formulae 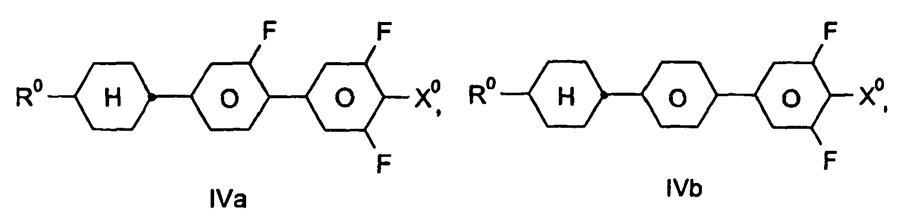 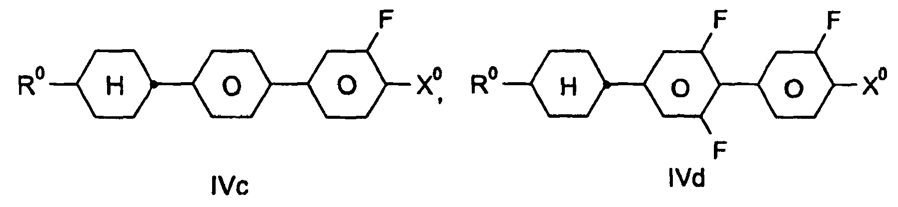 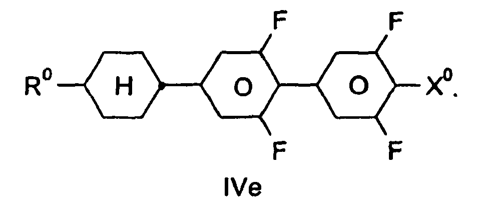 wherein X⁰ and R⁰ have the meaning given in formula II and X⁰ is preferably F or OCF₃. Especially preferred are compounds of formula IVa and IVe.
- The compounds of formula VI are preferably selected of the following formulae 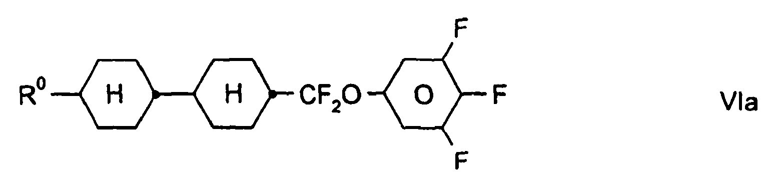 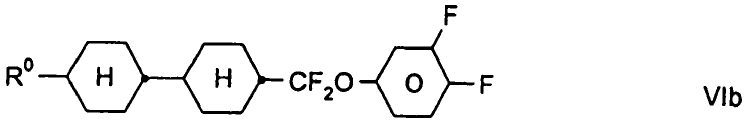 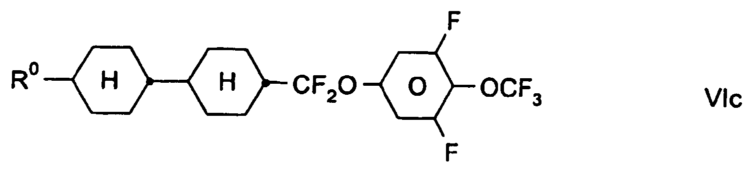 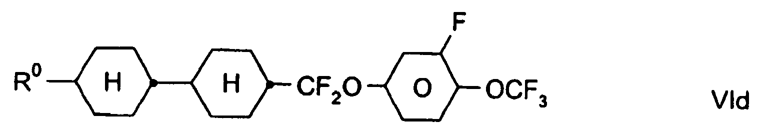 wherein R⁰ has the meaning given in formula II. Especially preferred are compounds of formula VIa and Vlb.
- The compounds of formula VII are preferably selected of the following formulae 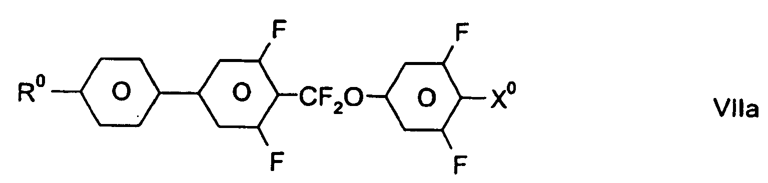 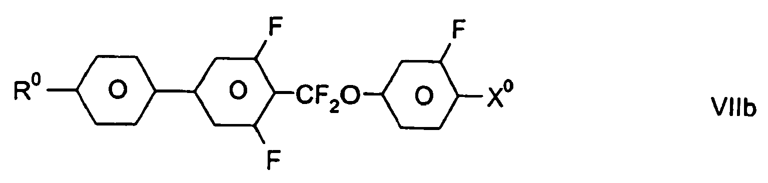 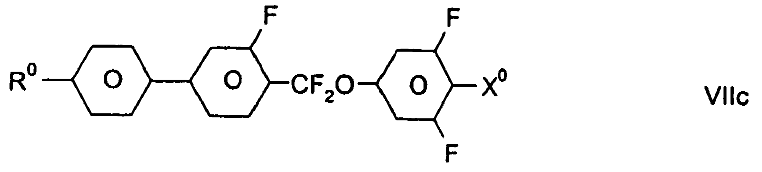 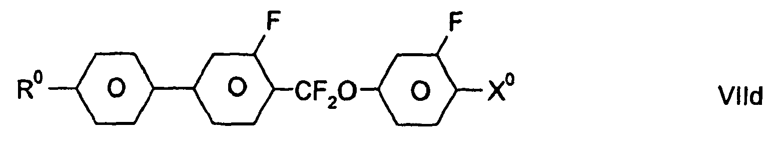 wherein X⁰ and R⁰ have the meaning given in formula II and X⁰ is preferably F or OCF₃. Especially preferred are compounds of formula VIIa.
- The medium additionally comprises one or more compounds selected of the following formulae 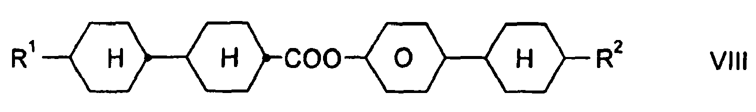 wherein R¹ and R² are as defined in formula IB, and are preferably selected from straight-chain alkyl with 2, 3, 4, 5 or 6 C-atoms.
- The medium additionally comprises one or more compounds selected of the following formulae 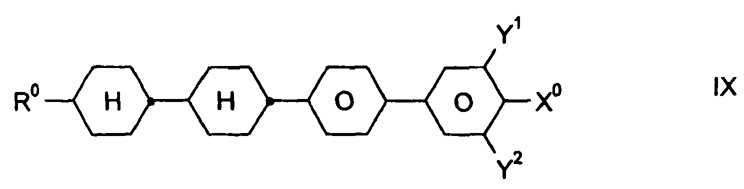 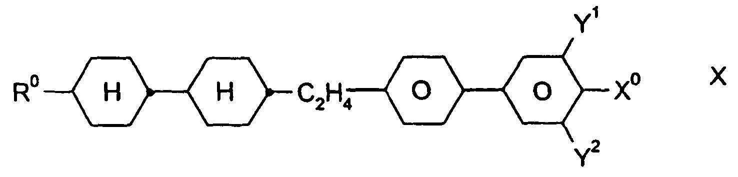 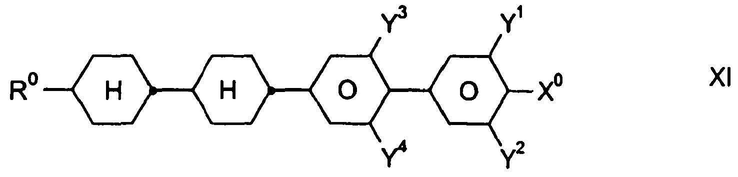 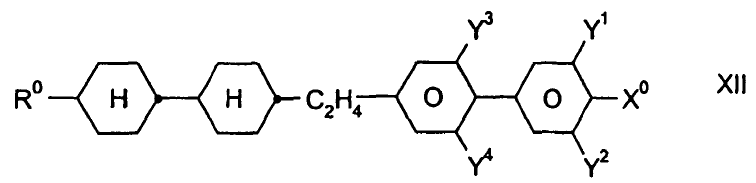 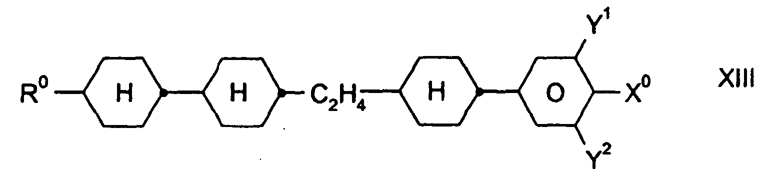 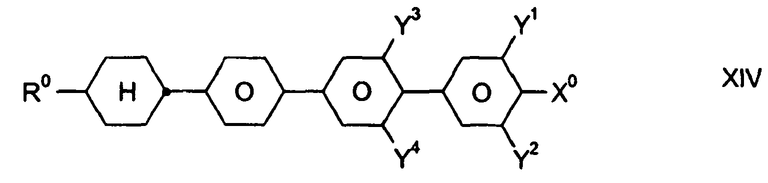 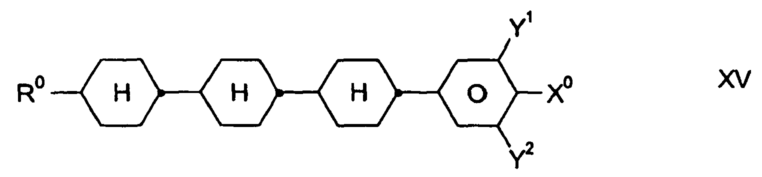 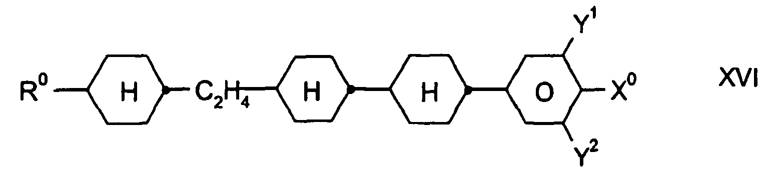 wherein R⁰, X⁰ and Y¹⁻⁴ are each, independently of one another, as defined in formulae II-VII. X⁰ is preferably F, Cl, CF₃, OCF₃ or OCHF₂. R⁰ is preferably alkyl, oxaalkyl, fluoroalkyl or alkenyl, each having up to 6 carbon atoms.
- The medium additionally comprises one or more compounds of the following formula 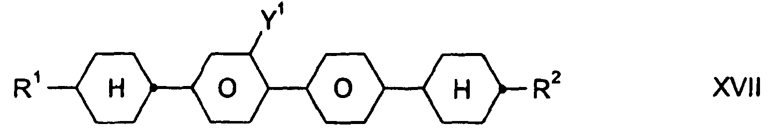 wherein R¹ and R² are as defined in formula IB and Y¹ is as defined in formula II. Especially preferred are compounds in which Y¹ is F.
- The medium additionally comprises one or more compounds selected of the following formulae 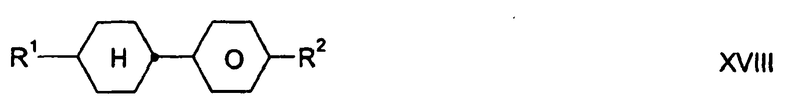 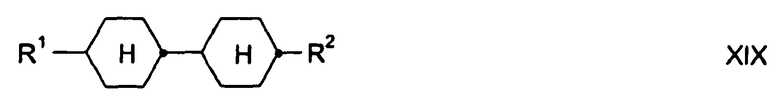 wherein R¹ and R² are as defined in formula IB, and are preferably selected from straight-chain alkyl or alkoxy with 1, 2, 3, 4, 5 or 6 C-atoms.
- The medium additionally comprises one or more alkenyl compounds of the following formula 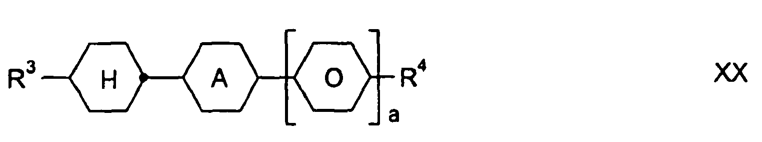 wherein
   - A: is 1,4-phenylene or trans-1,4-cyclohexylene,
   - a: is 0 or 1,
   - R³: is an alkenyl group having from 2 to 9 carbon atoms, and
   - R⁴: is as defined for R¹ in formula IA.
   Particularly preferred alkenyl compounds are those selected of the following formulae: 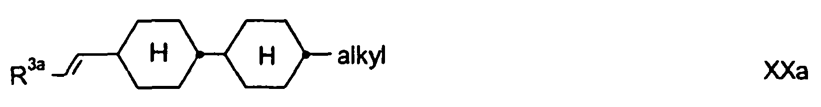 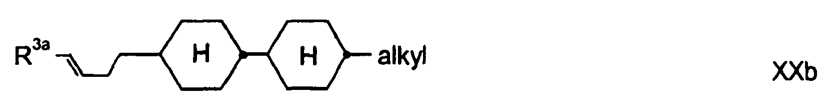 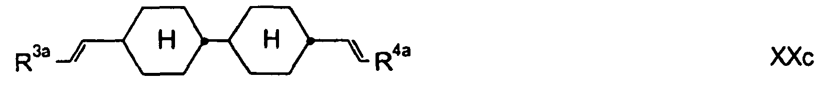 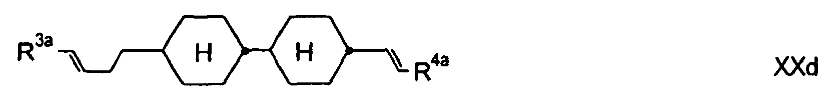 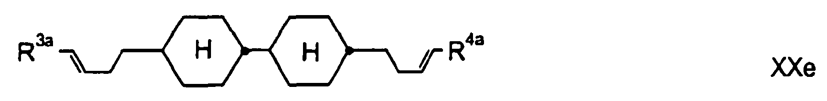 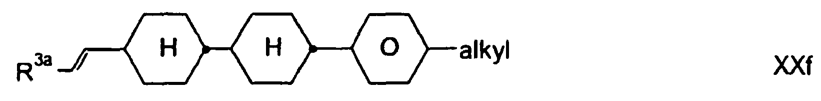 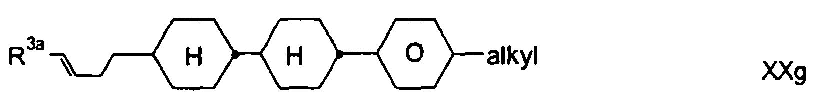 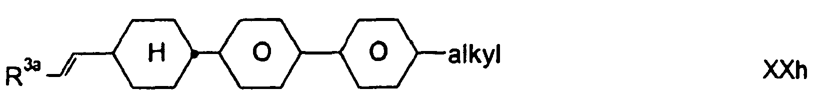 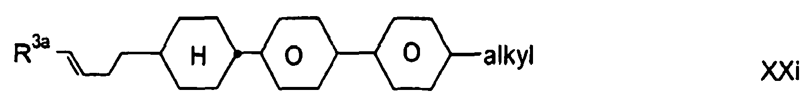 wherein R^{3a} and R^{4a} are independently of each other H, CH₃, C₂H₅ or n-C₃H₇ and alkyl is an alkyl group with 1 to 8 carbon atoms.
   Especially preferred are compounds of formula XXa, XXf and XXg, in particular wherein R^{3a} is H or CH₃.
- The medium additionally comprises one or more alkenyl compounds of the following formula 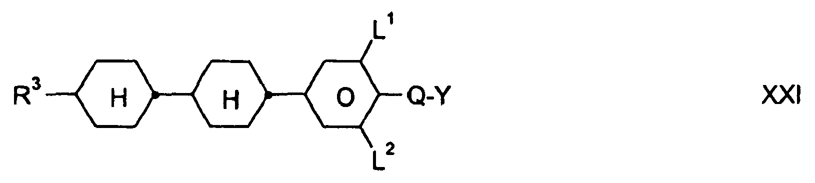 wherein
   - R³: is an alkenyl group with 2 to 7 carbon atoms,
   - Q: is CF₂, OCF₂, CFH, OCFH or a single bond,
   - Y: is F or Cl, and
   - L¹ and L²: are independently of each other H or F.
   Especially preferred are compounds of formula XXI wherein L¹ and/or L² are F and Q-Y is F or OCF₃. Further preferred are compounds of formula XI wherein R³ is 1E-alkenyl or 3E-alkenyl having 2 to 7, preferably 2, 3 or 4 carbon atoms.
   Very preferred are compounds of the following formula 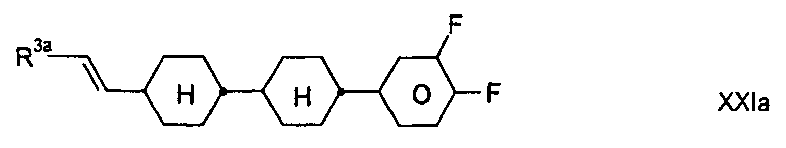 wherein R^{3a} is H, CH₃, C₂H₅ or n-C₃H₇, in particular H or CH₃.
- The medium comprises further compounds, preferably selected from the group consisting of the following formulae: 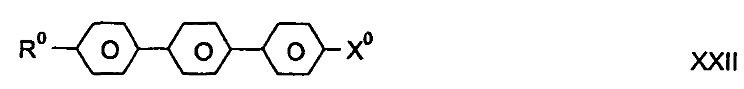 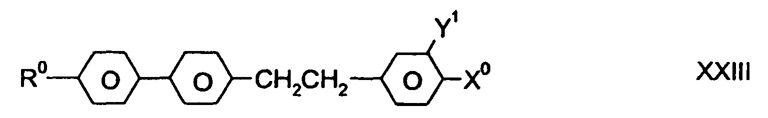 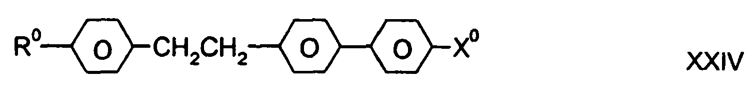 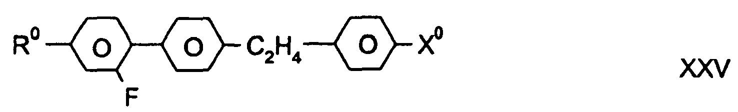 wherein R⁰, X⁰ and Y¹⁻⁴ are each, independently of one another, as defined in formulae II-VII, and the 1,4-phenylene rings may be substituted by CN, chlorine or fluorine. X⁰ is preferably F, Cl, CF₃, OCF₃ or OCHF₂. R⁰ is preferably alkyl, oxaalkyl, fluoroalkyl or alkenyl, each having up to 6 carbon atoms. The 1,4-phenylene rings are preferably mono- or polysubstituted by fluorine atoms.
- The medium comprises further compounds, preferably selected from the group consisting of the following formulae: 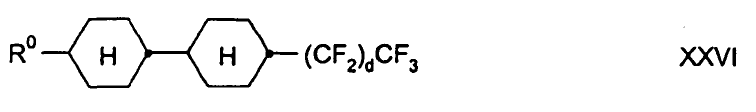 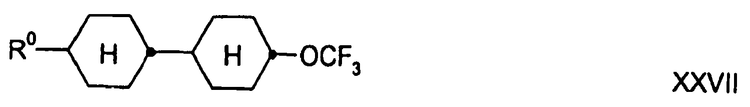 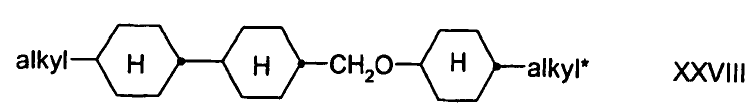 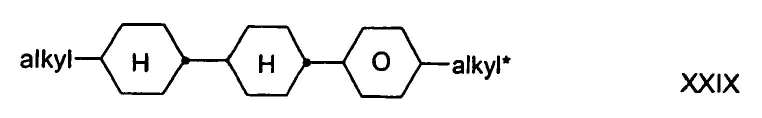 wherein R⁰ is as defined in formulae II-VII, d is 0, 1 or 2, and 'alkyl' and 'alkyl*' are each, independently of one another, a straight-chain or branched alkyl radical having 1-9 carbon atoms. R is preferably alkyl, oxaalkyl, fluoroalkyl or alkenyl, each having up to 6 carbon atoms. 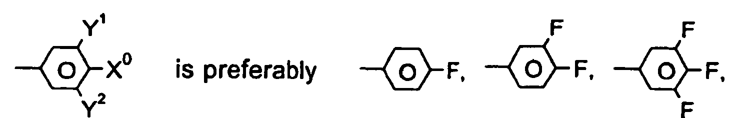 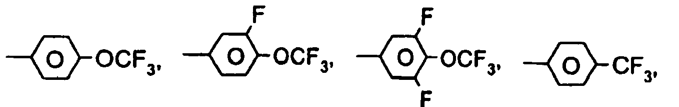 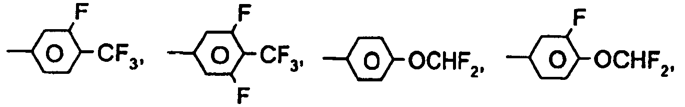 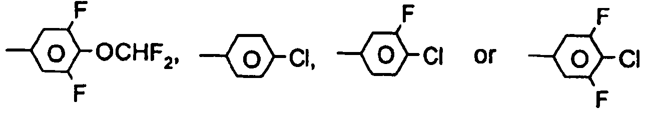
- The medium comprises one or more compounds of the formulae II, III, IV, V, VI or VII;
- The medium comprises one or more compounds of formula VIII, wherein R¹ and R² are straight-chain alkyl with 2, 3, 4, 5 or 6 C-atoms;
- The medium comprises one or more compounds of formula XIX, wherein R¹ and R² are straight-chain alkyl or alkoxy with 1, 2, 3, 4, 5 or 6 C-atoms;
- R⁰ is straight-chain alkyl or alkenyl having from 2 to 7 carbon atoms;
- The medium contains from 1 to 6, preferably 1, 2, 3 or 4 compounds of formula IA, most preferably of formula IA1;
- The medium contains from 1 to 5, preferably 1, 2 or 3 compounds of formula IB, most preferably of formula IB1;
- The medium comprises one or more compounds of formula IA, IB, IIa, Vla, Vlla and VIII, and optionally one or more compounds of formula IVa, Vlb and XIX;
- The proportion of compounds of the formula IA in the medium is 1-40%, very preferably 10-35% by weight.
- The proportion of compounds of the formula IB in the medium is 1-15%, very preferably 1-10%, most preferably 1-8% by weight.
- The compound comprises at least 10% of one or more compounds of formula VIIa, in particular wherein X⁰ is F and R⁰ is straight-chain alkyl or alkenyl with 2 to 7 C atoms.
- The proportion of compounds of the formula II in the medium is 10-50%, very preferably 15-40% by weight.
- The proportion of compounds of the formula VI in the medium is 10-50%, very preferably 15-40% by weight.
- The proportion of compounds of the formula VII in the medium is 10% to 40%, very preferably 15-35% by weight.
- The proportion of compounds of the formula IV in the medium is 1-20%, very preferably 1-10% by weight.
- The proportion of compounds of the formula VIII in the medium is 1-12%, very preferably 1-8% by weight.
- The proportion of compounds of the formula XIX in the medium is 1-10%, very preferably 1-5% by weight.
- The medium essentially consists of compounds selected from the group consisting of the general formulae IA, IB and II to XXVI.

The term "alkyl" covers straight-chain and branched alkyl groups having 1-7 carbon atoms, in particular the straight-chain groups methyl, ethyl, propyl, butyl, pentyl, hexyl and heptyl. Groups having 2-5 carbon atoms are generally preferred.

The term "alkenyl" covers straight-chain and branched alkenyl groups having 2-7 carbon atoms, in particular the straight-chain groups. Particular alkenyl groups are C₂-C₇-1 E-alkenyl, C₄-C₇-3E-alkenyl, C₅-C₇-4-alkenyl, C₆-C₇-5-alkenyl and C₇-6-alkenyl, in particular C₂-C₇-1 E-alkenyl, C₄-C₇-3E-alkenyl and C₅-C₇-4-alkenyl. Examples of preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.

The term "fluoroalkyl" preferably covers straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" preferably covers straight-chain radicals of the formula CnH₂ₙ₊₁-O-(CH₂)ₘ, in which n and m are each, independently of one another, from 1 to 6. n is preferably = 1 and m is preferably from 1 to 6.

It has been found that even a relatively small proportion of compounds of the formula IA and IB mixed with conventional liquid-crystal materials, but in particular with one or more compounds of the formulae II, III, IV, V, VI and/or VII, results in a significant lowering of the threshold voltage and in low birefringence values, with broad nematic phases with low smectic-nematic transition temperatures being observed at the same time, improving the shelf life. Particular preference is given to mixtures which, besides one or more compounds of the formula IA and IB, comprise one or more compounds of the formula VI, in particular compounds of the formula VIa. The compounds of the formulae IA, IB and II to VII are colourless, stable and readily miscible with one another and with other liquid-crystalline materials. Furthermore, the mixtures according to the invention are distinguished by very high clearing points, the values for the rotational viscosity γ₁ being comparatively low, and by a high LTS.

Through a suitable choice of the meanings of R° and X°, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio of the elastic constants k₃₃ (bend) and k₁₁ (splay) compared with alkyl or alkoxy radicals. 4-alkenyl radicals, 3-alkenyl radicals and the like generally give lower threshold voltages and smaller values of k₃₃/k₁₁ compared with alkyl and alkoxy radicals.

A -CH₂CH₂- group generally results in higher values of k₃₃/k₁₁ compared with a single covalent bond. Higher values of k₃₃/k₁₁ facilitate, for example, flatter transmission characteristic lines in TN cells with a 90° twist (in order to achieve grey shades) and steeper transmission characteristic lines in STN, SBE and OMI cells (greater multiplexability), and vice versa.

The optimum mixing ratio of the compounds of the formulae IA, IB and II + III + IV + V + VI +VII depends substantially on the desired properties, on the choice of the components of the formulae IA, IB, II, III, IV, V, VI and/or VII, and the choice of any other components that may be present. Suitable mixing ratios within the range given above can easily be determined from case to case.

The total amount of compounds of the formulae IA, IB and II to XXIX in the mixtures according to the invention is not crucial. The mixtures can therefore comprise one or more further components for the purposes of optimising various properties. However, the observed effect on the addressing times and the threshold voltage is generally greater, the higher the total concentration of compounds of the formulae IA, IB and II to XXIX.

In a particularly preferred embodiment, the media according to the invention comprise compounds of the formulae II to VII (preferably II and/or VI, in particular IIa and VIa) in which X⁰ is F, OCF₃, OCHF₂, OCH=CF₂, OCF=CF₂ or OCF₂-CF₂H. A favourable synergistic effect with the compounds of the formula IA and IB results in particularly advantageous properties. In particular, mixtures comprising compounds of the formula IA, IB and of the formula VIa are distinguished by their low threshold voltages.

Liquid crystal media according to the present invention comprising compounds of formula IA and IB and further comprising one or more compounds of formulae II-XXIX are characterized by low values of the rotational viscosity, high birefringence, good LTS and show fast response times. They are particularly suitable for TV, video and monitor applications.

The individual compounds of the formulae IA, IB and II to XXIX and their sub-formulae which can be used in the media according to the invention are either known or they can be prepared analogously to the known compounds.

The construction of the MLC display according to the invention from polarisers, electrode base plates and surface-treated electrodes corresponds to the conventional construction for displays of this type. The term "conventional construction" is broadly drawn here and also covers all derivatives and modifications of the MLC display, in particular including matrix display elements based on poly-Si TFT or MIM.

A significant difference between the displays according to the invention and the conventional displays based on the twisted nematic cell consists, however, in the choice of the liquid-crystal parameters of the liquid-crystal layer.

The liquid-crystal mixtures which can be used in accordance with the invention are prepared in a manner conventional per se, for example by mixing one or more compounds of formula IA and IB with one or more compounds selected from formulae II-XIX, or with one or more further liquid crystal compounds and/or additives. In general, the desired amount of the components used in the lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The dielectrics may also comprise further additives known to the person skilled in the art and described in the literature. For example, 0-15% of pleochroic dyes, nanoparticles, stabilizers or chiral dopants can be added. Suitable dopants and stabilizers are shown in table C and D below.

In the present application and in the examples below, the structures of the liquid-crystal compounds are indicated by means of acronyms, the transformation into chemical formulae taking place in accordance with Tables A and B below. All radicals CₙH₂ₙ₊₁ and CₘH₂ₘ₊₁ are straight-chain alkyl radicals having n and m carbon atoms respectively; n and m are preferably 0, 1, 2, 3, 4, 5, 6 or 7. The coding in Table B is self-evident. In Table A, only the acronym for the parent structure is indicated. In individual cases, the acronym for the parent structure is followed, separated by a dash, by a code for the substituents R¹, R², L¹ and L².

| Code for R^{1*}, R^{2*} ,L^{1*} ,L^{2*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| V-n | CH₂=CH | CₙH₂ₙ₊₁ | H | H |

Preferred mixture components of the mixture concept according to the invention are given in Tables A and B.

**Table A**

| | |
|---|---|
| 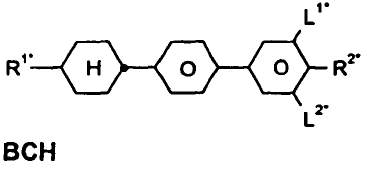 | 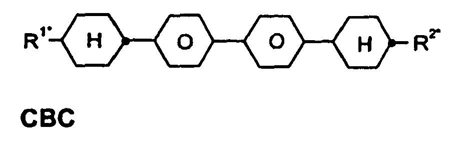 |
| 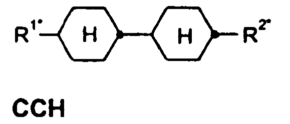 | 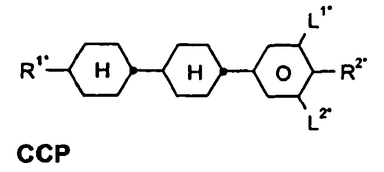 |
| 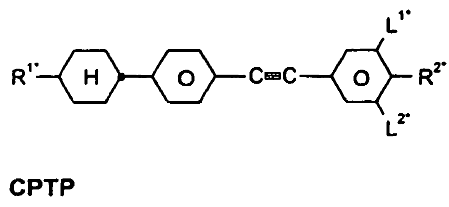 | 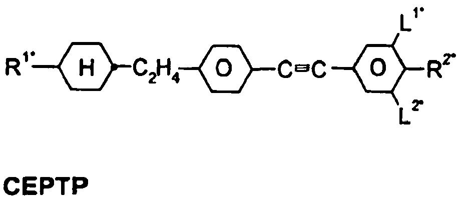 |
| 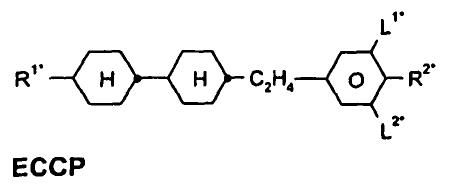 | 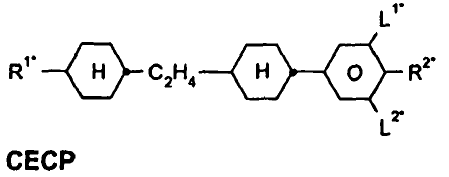 |
| 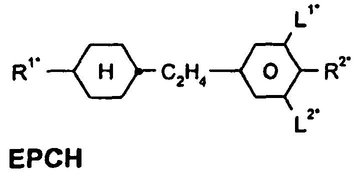 | 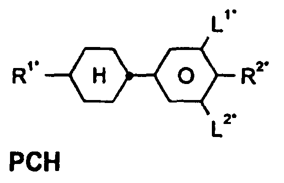 |
| 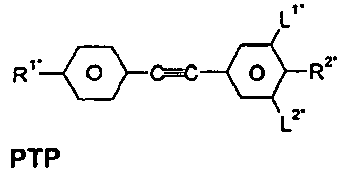 | 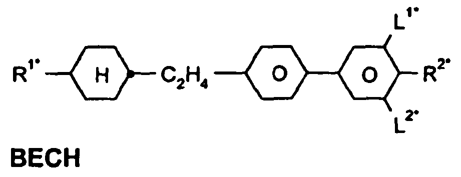 |
| 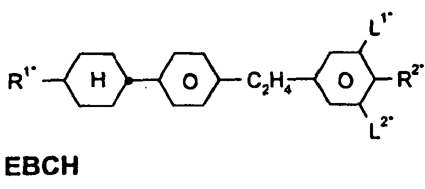 | 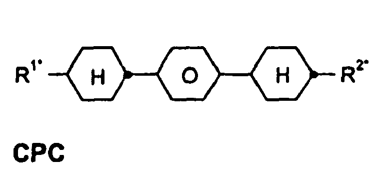 |
| 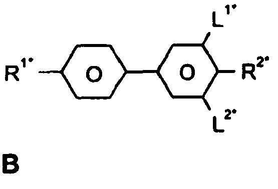 | 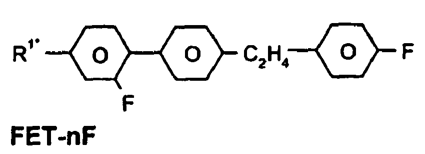 |
| 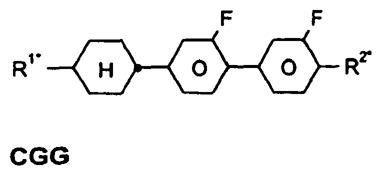 | 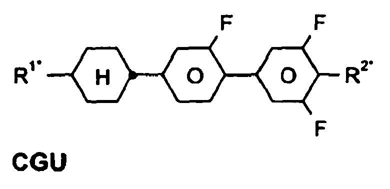 |
| 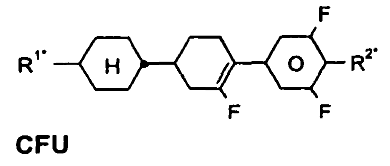 | 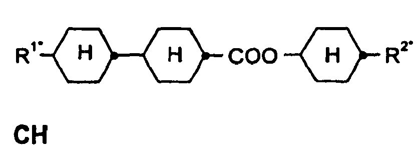 |

**Table B**

| | |
|---|---|
| 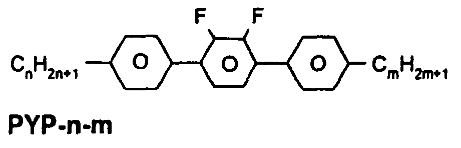 | 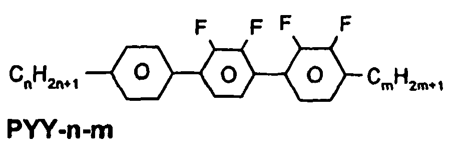 |
| 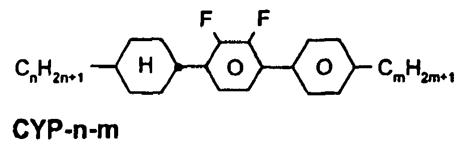 | 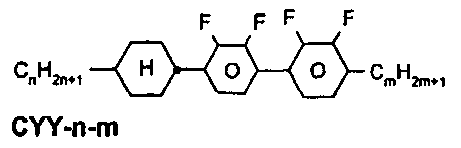 |
| 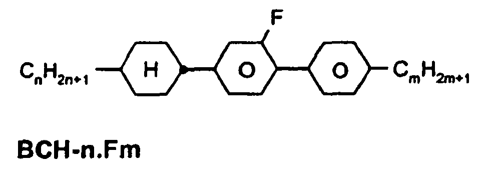 | 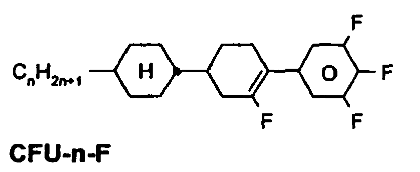 |
| 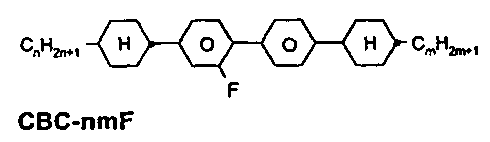 | 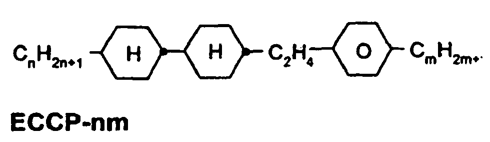 |
| 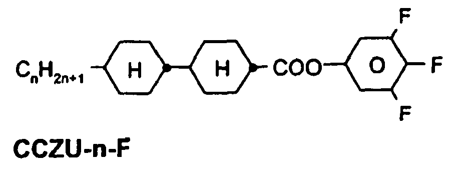 | 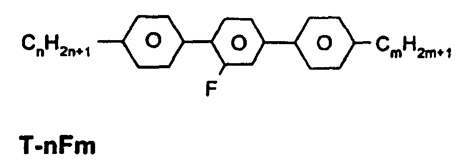 |
| 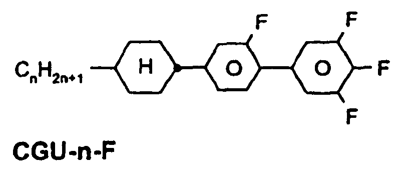 | 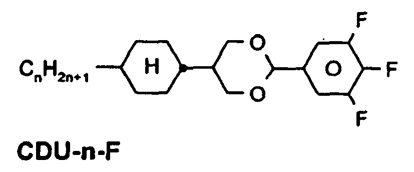 |
| 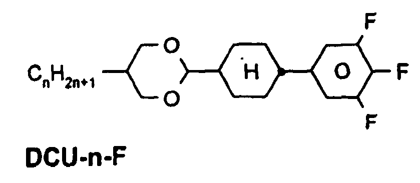 | 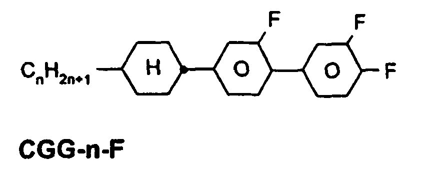 |
| 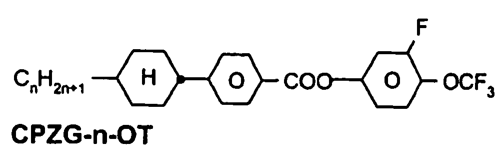 | 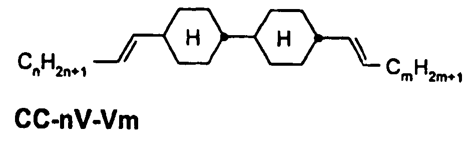 |
| 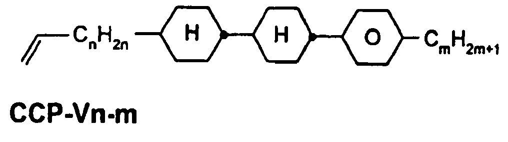 | 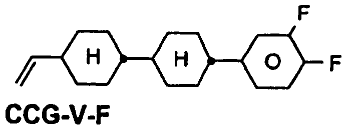 |
| 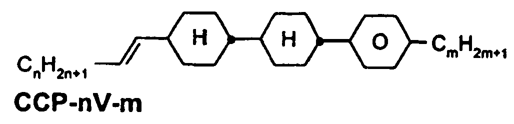 | 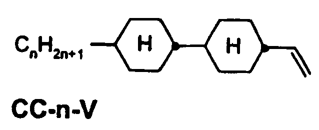 |
| 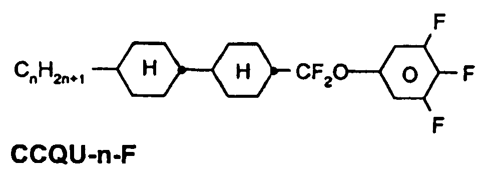 | 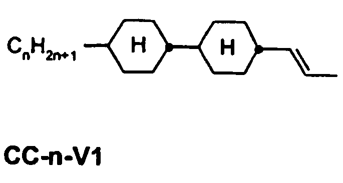 |
| 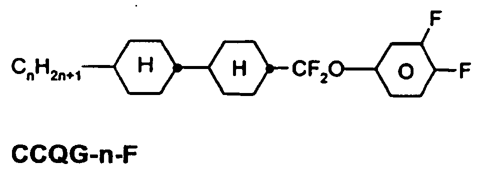 | 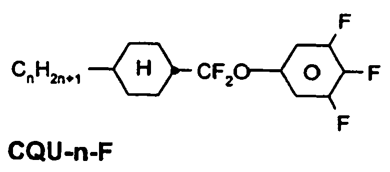 |
| 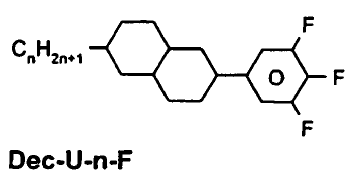 | 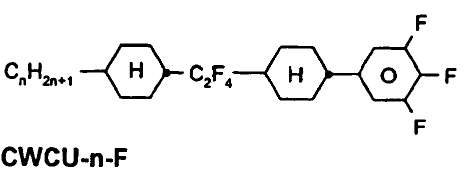 |
| 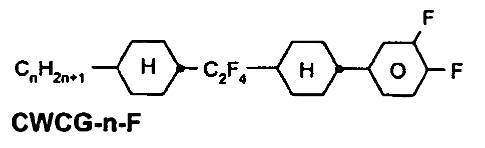 | 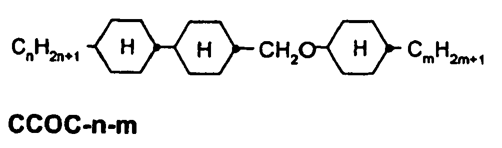 |
| 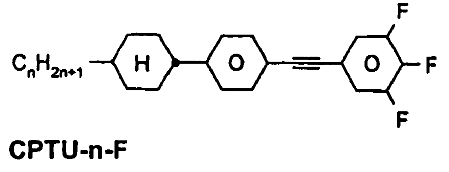 | 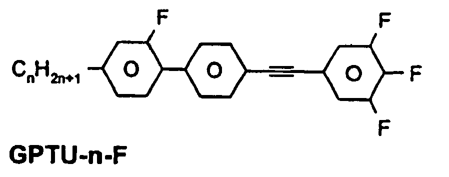 |
| 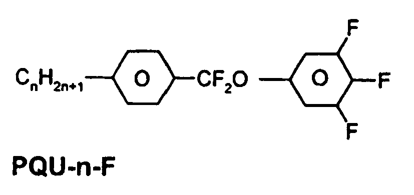 | 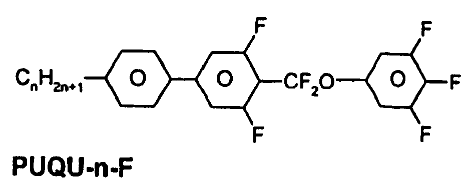 |
| 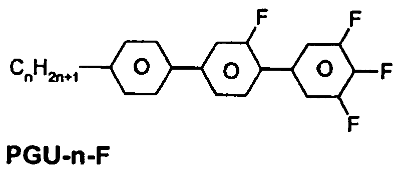 | 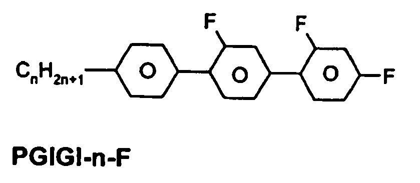 |
| 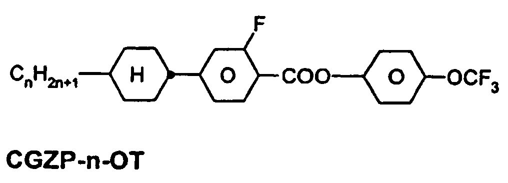 | 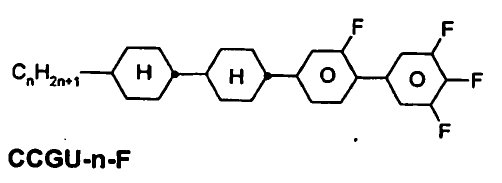 |
| 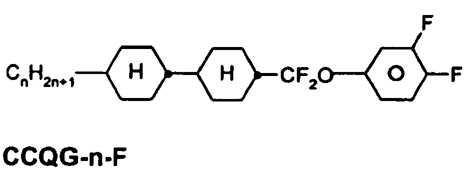 | 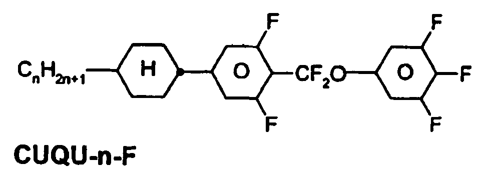 |
| 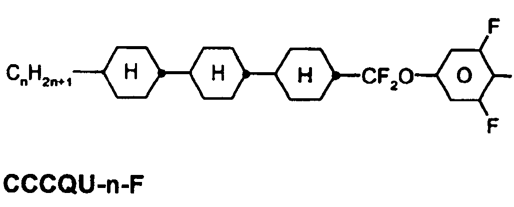 | 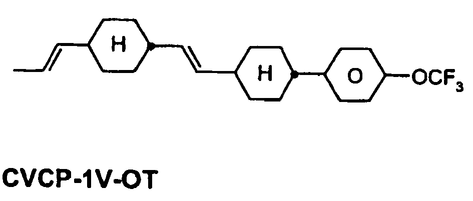 |
| 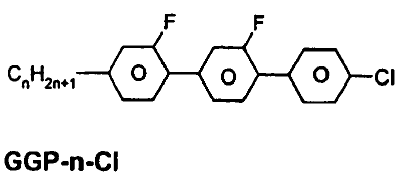 | 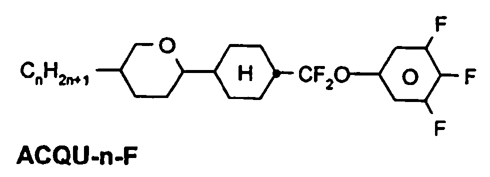 |
| 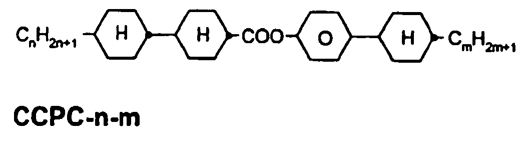 | |

**Table C**

| | |
|---|---|
| Table C shows possible dopants which are generally added to the compounds according to the invention, preferably in proportions of from 0.1 to 10 wt.-%, very preferably from 0.1 to 6 wt.-%. | |
| 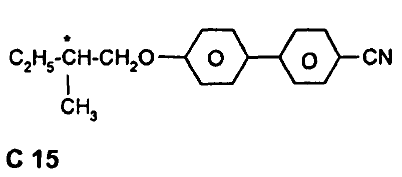 | 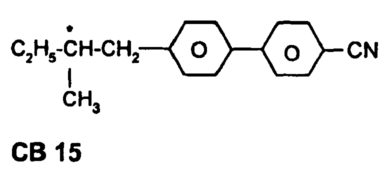 |
| 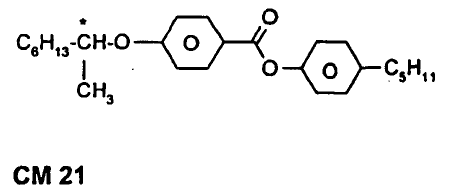 | 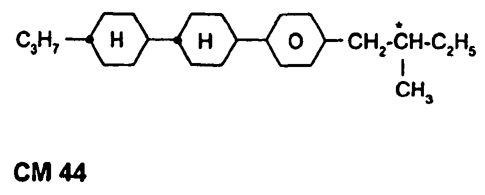 |
| 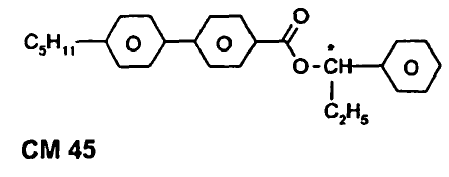 | 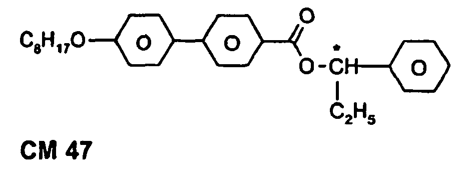 |
| 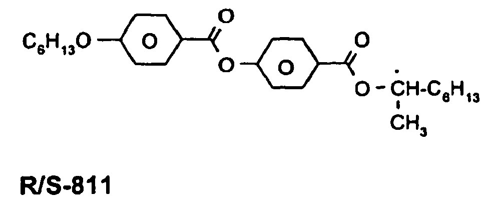 | 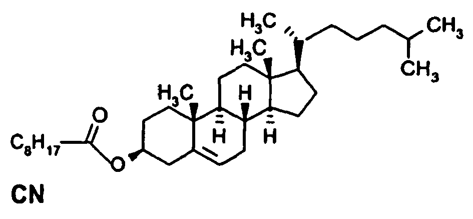 |
| 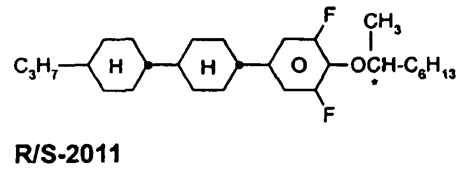 | 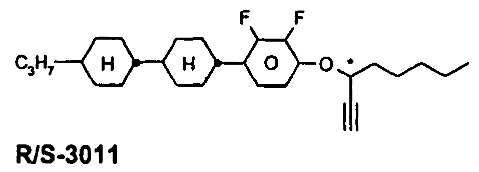 |
| 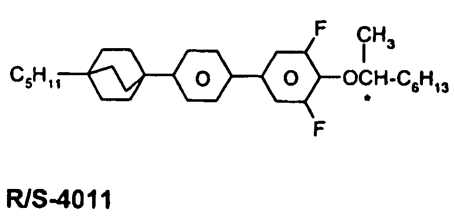 | 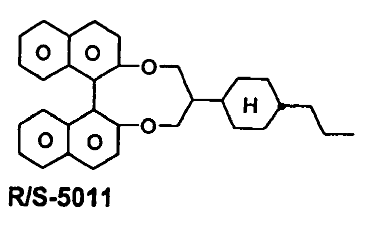 |
| 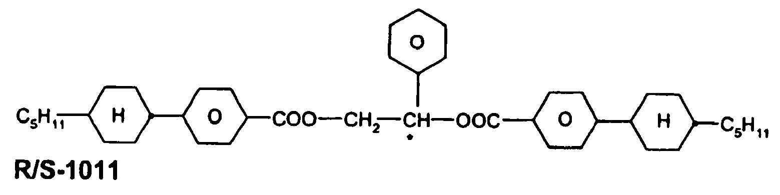 | |

**Table D**

| | |
|---|---|
| Stabilisers which can be added, for example, to the mixtures according to the invention are shown below. | |
| 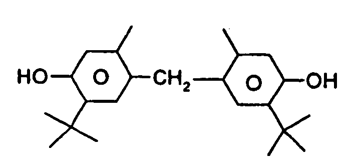 | 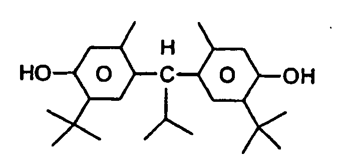 |
| 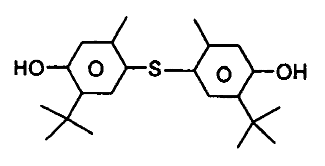 | 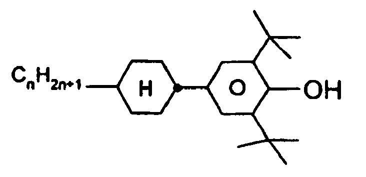 |
| 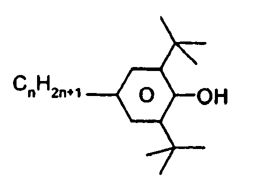 | 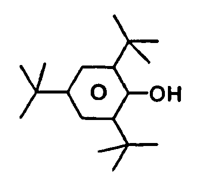 |
| 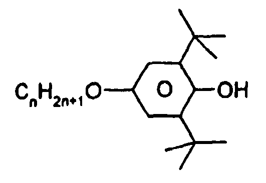 | 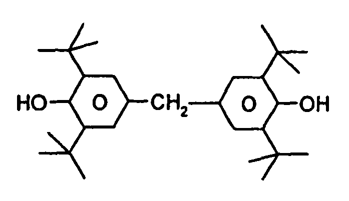 |
| 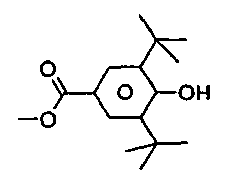 | 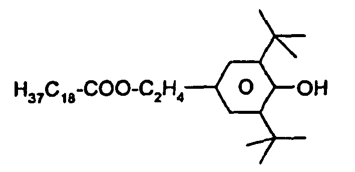 |
| 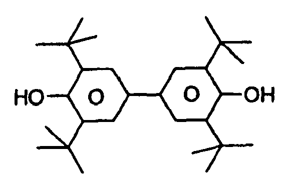 | 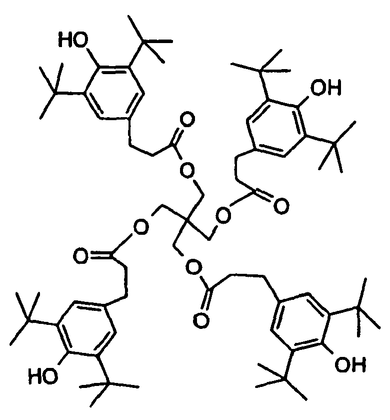 |
| 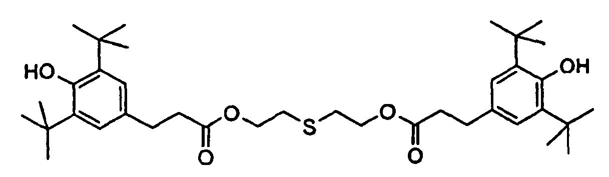 | |
| 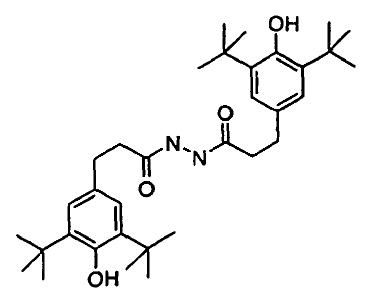 | 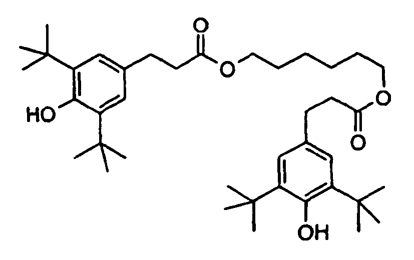 |
| 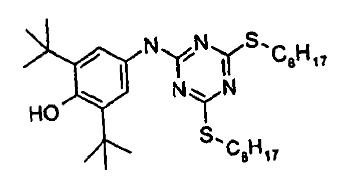 | 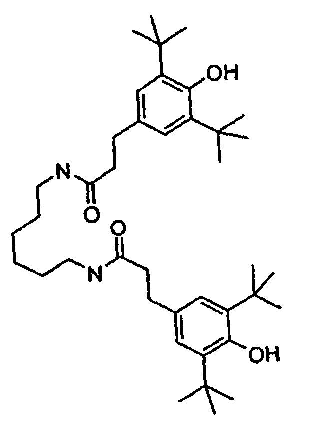 |
| 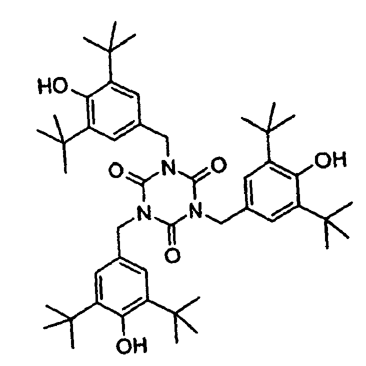 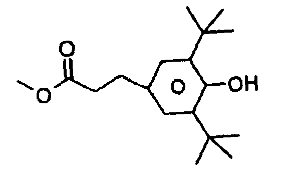 | 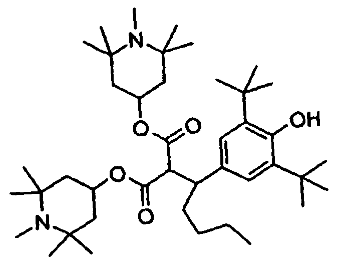 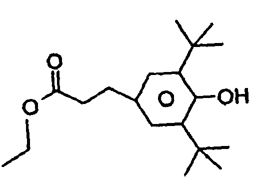 |
| 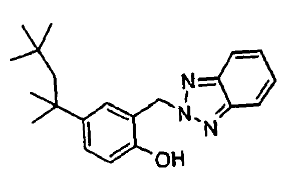 | 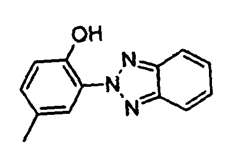 |
| 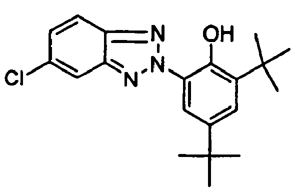 | 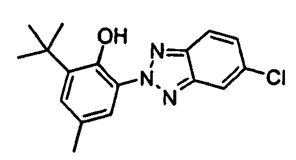 |
| | |
| 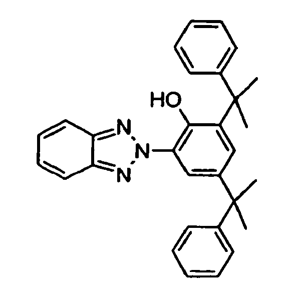 | 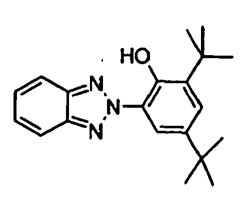 |
| 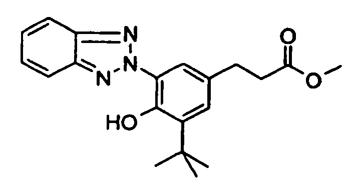 | 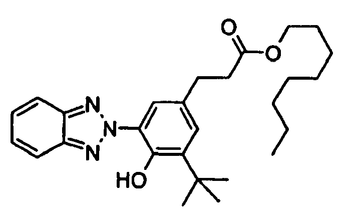 |
| 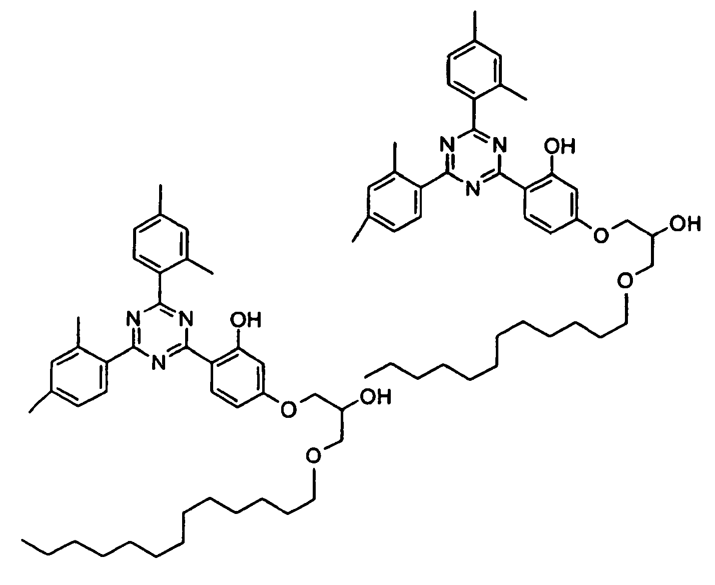 | |
| 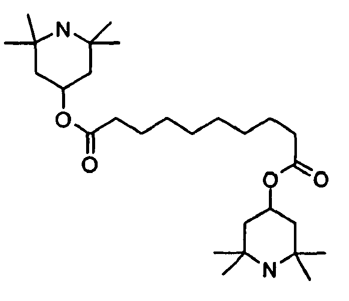 | 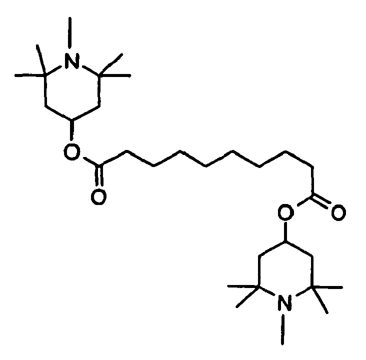 |

Besides one or more compounds of the formula IA and IB, particularly preferred mixtures comprise one, two, three, four, five or more compounds from Table B.

The following examples are intended to explain the invention without restricting it. Above and below, percentages are per cent by weight. All temperatures are given in degrees Celsius. m.p. denotes melting point, cl.p. = clearing point. Furthermore, C = crystalline state, N = nematic phase, S = smectic phase and I = isotropic phase. The data between these symbols represent the transition temperatures. Δn denotes the optical anisotropy and nₒ the refractive index (589 nm, 20°C). The flow viscosity ν₂₀ (mm²/sec) and the rotational viscosity γ₁ [mPa·s] were each determined at 20°C. V₁₀ denotes the voltage for 10% transmission (viewing angle perpendicular to the plate surface). tₒₙ denotes the switch-on time and t_{off} the switch-off time at an operating voltage corresponding to 2 times the value of V₁₀. Δε denotes the dielectric anisotropy (Δε = ε∥-ε ⊥ , where ε∥ denotes the dielectric constant parallel to the longitudinal molecular axes and ε⊥ denotes the dielectric constant perpendicular thereto). The electro-optical data were measured in a TN cell at the 1 st minimum (i.e. at a d · Δn value of 0.5 µm) at 20°C, unless expressly stated otherwise. The optical data were measured at 20°C, unless expressly stated otherwise.

### Example 1

| | | | |
|---|---|---|---|
| CCP-1 F.F.F | 8.50% | Clearing point [°C]: | 86.5 |
| CCP-2F.F.F | 8.50% | Δn [589 nm, 20°C]: | 0.0814 |
| CCP-3F.F.F | 8.50% | Δε[1kHz, 20°C]: | +15.0 |
| CCQU-2-F | 8.00% | γ₁ [m·Pas, 20°C]: | 191 |
| CCQU-3-F | 10.00% | | |
| CCQU-5-F | 8.00% | | |
| CGU-2-F | 2.00% | | |
| PUQU-2-F | 7.00% | | |
| PUQU-3-F | 9.50% | | |
| ACQU-2-F | 7.00% | | |
| ACQU-3-F | 7.00% | | |
| CCH-34 | 2.00% | | |
| CH-33 | 2.00% | | |
| CH-43 | 2.00% | | |
| CH-45 | 2.00% | | |
| CCPC-33 | 3.00% | | |
| CCPC-34 | 3.00% | | |
| CCPC-35 | 2.00% | | |

### Example 2

| | | | |
|---|---|---|---|
| CCP-1 F.F.F | 8.50% | Clearing point [°C]: | 86.0 |
| CCP-2F.F.F | 8.00% | Δn [589nm, 20°C]: | 0.0812 |
| CCP-3F.F.F | 8.00% | Δε [1kHz, 20°C]: | +15.1 |
| CCQU-2-F | 7.00% | γ₁ [m·Pas, 20°C]: | 196 |
| CCQU-3-F | 10.00% | ν₂₀ [mm²/sec, 20°C]: | 26 |
| CCQU-5-F | 10.00% | | |
| CGU-2-F | 1.50% | | |
| PUQU-2-F | 6.00% | | |
| PUQU-3-F | 10.00% | | |
| ACQU-2-F | 7.00% | | |
| ACQU-3-F | 7.00% | | |
| CCH-34 | 2.00% | | |
| CH-33 | 2.00% | | |
| CH-43 | 2.00% | | |
| CCPC-33 | 3.00% | | |
| CCPC-34 | 3.00% | | |
| CCPC-35 | 2.00% | | |
| CCQG-2-F | 3.00% | | |

### Example 3

| | | | |
|---|---|---|---|
| CCP-1 F.F.F | 5.00% | Clearing point [°C]: | 86.3 |
| CCP-2F.F.F | 7.00% | Δn[589nm,20°C]: | 0.0811 |
| CCP-3F.F.F | 7.00% | Δε[1kHz, 20°C]: | +15.2 |
| CCQU-2-F | 10.00% | γ₁ [m·Pas, 20°C]: | 199 |
| CCQU-3-F | 10.00% | | |
| CCQU-5-F | 10.00% | | |
| CGU-2-F | 3.00% | | |
| PUQU-2-F | 5.50% | | |
| PUQU-3-F | 10.00% | | |
| ACQU-2-F | 7.00% | | |
| ACQU-3-F | 7.00% | | |
| CCH-34 | 2.00% | | |
| CH-33 | 2.00% | | |
| CH-43 | 2.00% | | |
| CCPC-33 | 3.00% | | |
| CCPC-34 | 2.50% | | |
| CCPC-35 | 2.00% | | |
| CCQG-2-F | 5.00% | | |

## Claims

1. Liquid crystal medium comprising one or more compounds of formula IA and one or more compounds of formula IB 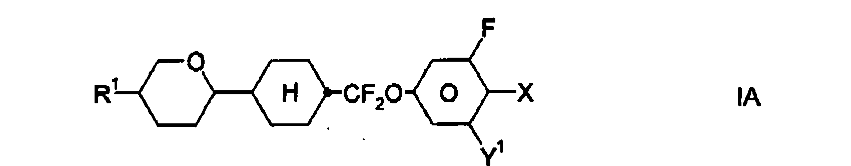 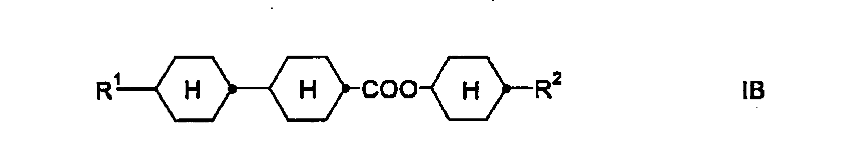 wherein
R¹ and R² are each, independently of one another, an alkyl radical having from 1 to 12 carbon atoms which is unsubstituted, monosubstituted by CN or CF₃ or at least monosubstituted by halogen, wherein one or more CH₂ groups are optionally, in each case independently of one another, replaced by -O-, -S-, 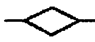 , -CH=CH-, -C≡C-, -CO-, -CO-O-, -O-CO- or -O-CO-O- in such a way that O atoms are not linked directly to one another,
Y¹ is H or F,
X is F, Cl or a halogenated alkyl, alkenyl, alkoxy or alkenyloxy radical having up to 6 carbon atoms, and
wherein the medium contains no compounds comprising a cyano group.

2. Medium according to claim 1, **characterized in that** it comprises one or more compounds of the following formulae 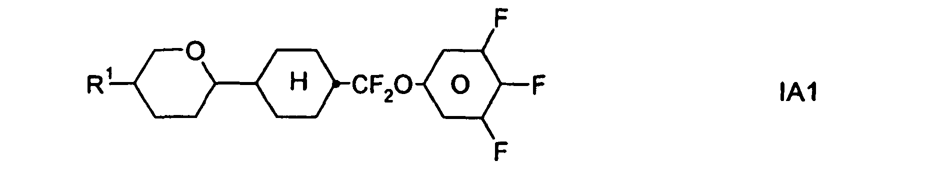 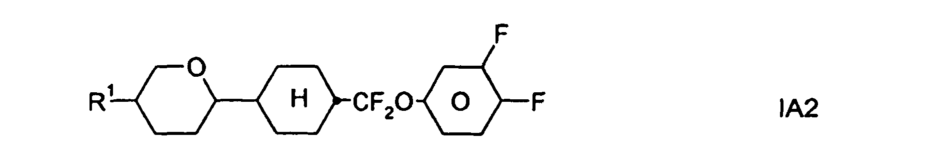 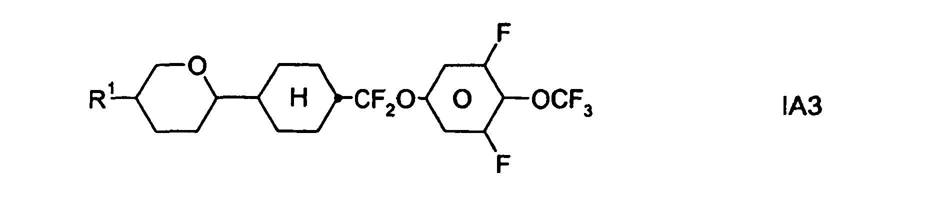 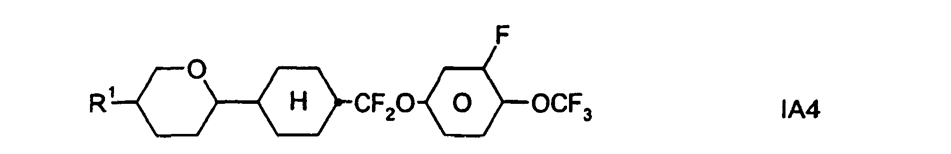 wherein R¹ has the meaning given in claim 1.

3. Medium according to claim 1 or 2, **characterized in that** it additionally comprises one or more compounds selected from the group consisting of the general formulae II, III, IV, V, VI and VII 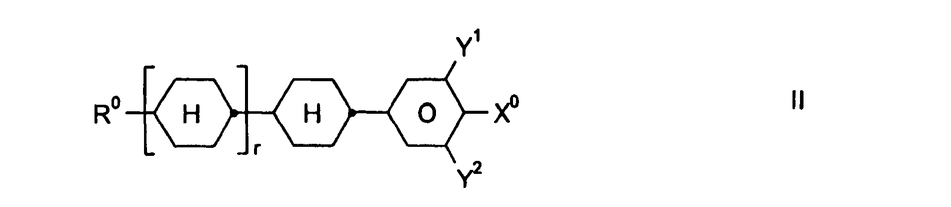 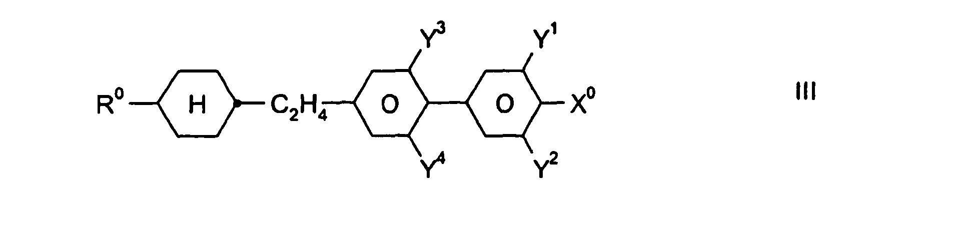 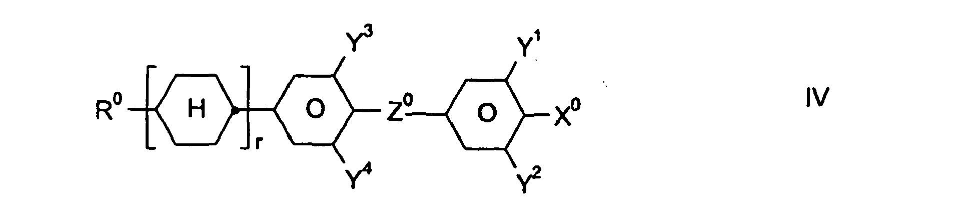 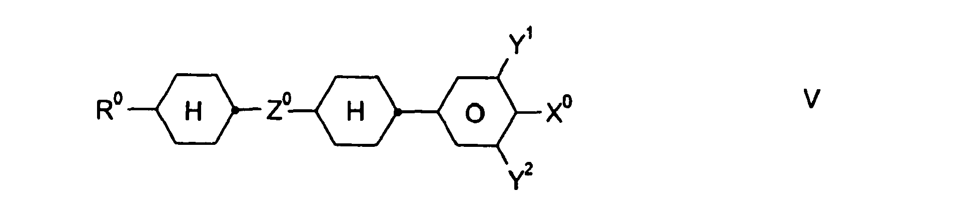 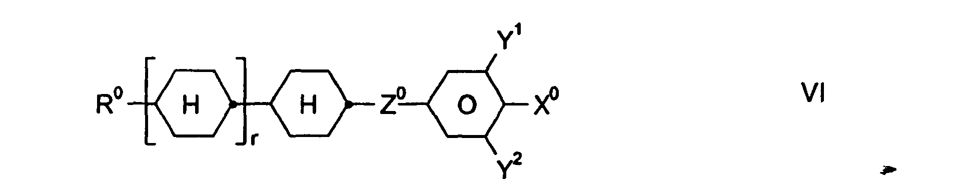 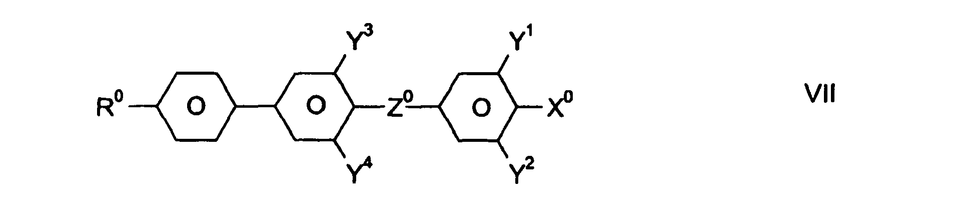 in which the individual radicals have the following meanings:
R⁰: n-alkyl, alkoxy, oxaalkyl, fluoroalkyl or alkenyl, each having up to 9 carbon atoms,
X⁰: F, Cl, halogenated alkyl, halogenated alkenyl, halogenated alkenyloxy or halogenated alkoxy having from 1 to 6 carbon atoms,
Z⁰_{:} -C₂H₄-, -(CH₂)₄-, -CH=CH-, -CF=CF-, -C₂F₄-, -CH₂CF₂-,CF₂CH₂-, -CH₂O-, -OCH₂-, -COO-, -OCF₂- or -CF₂O-,
Y¹ to Y⁴: each independently of one another H or F,
r: 0 or 1;

4. Medium according to at least one of claims 1 to 3, **characterized in that** it additionally comprises one or more compounds of the following formula 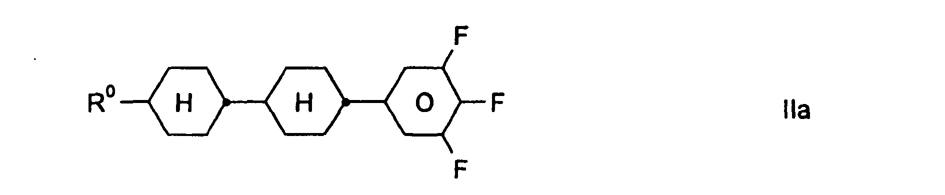 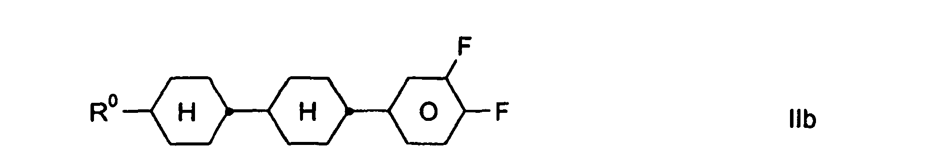 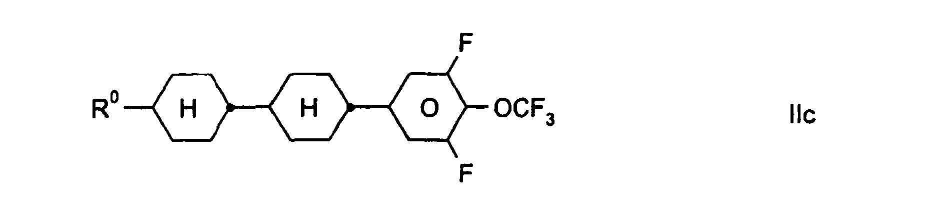 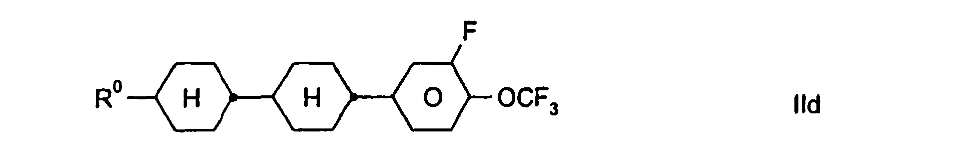 wherein R⁰ has the meaning given in claim 3.

5. Medium according to at least one of claims 1 to 4, **characterized in that** it additionally comprises one or more compounds of the following formula 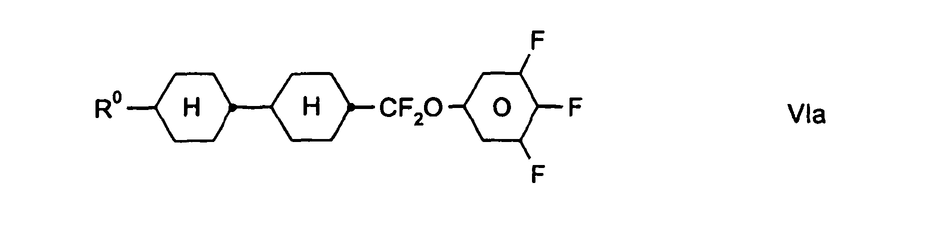 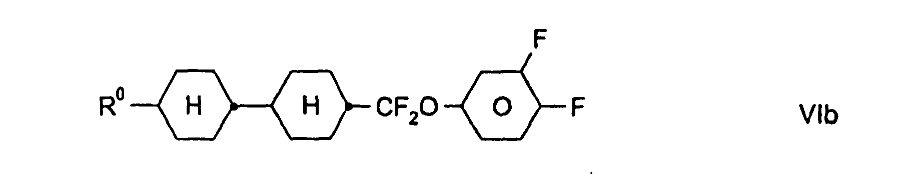 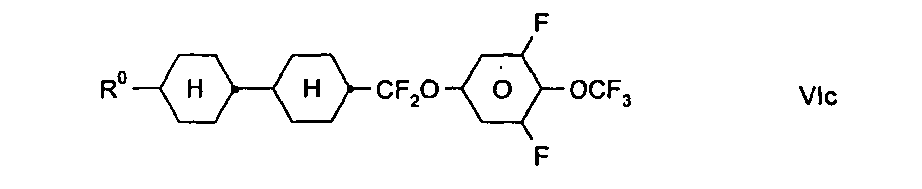 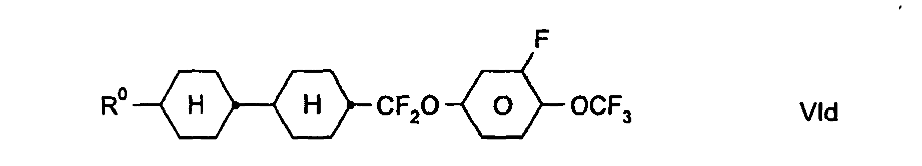 wherein R⁰ has the meaning given in claim 3.

6. Medium according to at least one of claims 1 to 5, **characterized in that** it additionally comprises one or more compounds of the following formula 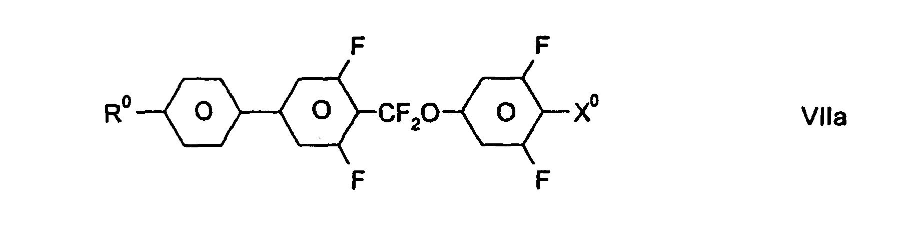 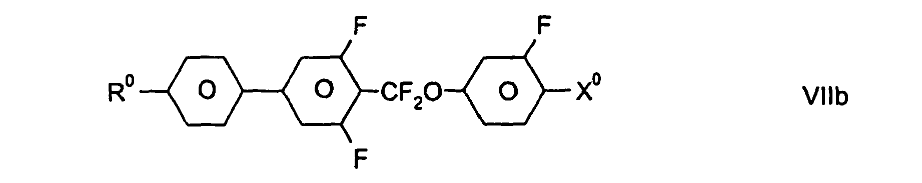 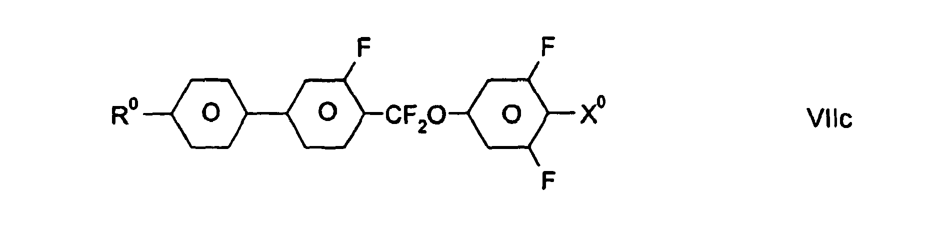 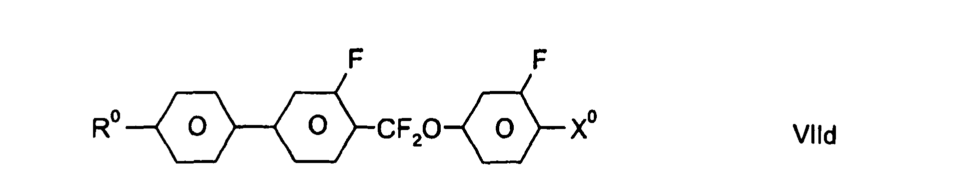 wherein X⁰ and R⁰ have the meaning given in formula II and X⁰ is preferably F or OCF₃. Especially preferred are compounds of formula VIIa.

7. Medium according to at least one of claims 1 to 6, **characterized in that** it additionally comprises one or more compounds of the following formula 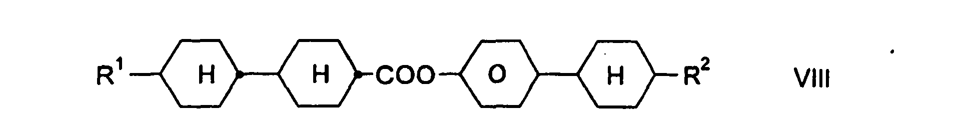 wherein R¹ and R² are as defined in claim 1.

8. Medium according to at least one of claims 1 to 7, **characterized in that** it comprises one or more compounds of formula IA, IB, IIa, VIa, VIIa and VIII, and optionally one or more compounds of formula IVa, Vlb and XIX.

9. Medium according to at least one of claims 1 to 8, **characterized in that** it comprises
- 1-40% by weight of compounds of formula IA,
- 1-15% by weight of compounds of formula IB,
- 10-50% by weight of compounds of formula II,
- 10-50% by weight of compounds of formula VI,
- 10-40% by weight of compounds of formula VII.

10. Electro-optical liquid crystal display containing a liquid crystal medium according to at least one of claims 1 to 9.

11. Process of preparing a medium according to one or more of claims 1 to 9, by mixing one or more compounds of formula IA and IB as defined in claim 1 with one or more compounds as defined in one or more of claims 3 to 7 or with one or more further liquid crystal compounds and/or additives.

## Patentansprüche

1. Flüssigkristallmedium enthaltend eine oder mehrere Verbindungen der Formel IA und eine oder mehrere Verbindungen der Formel IB 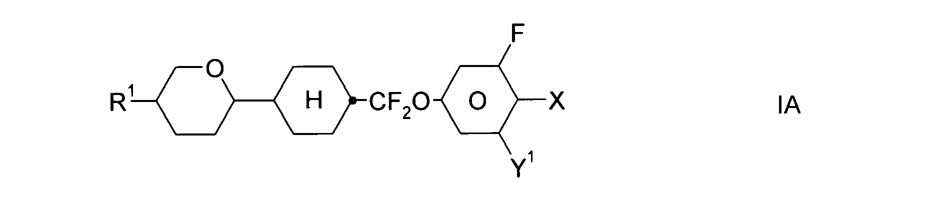 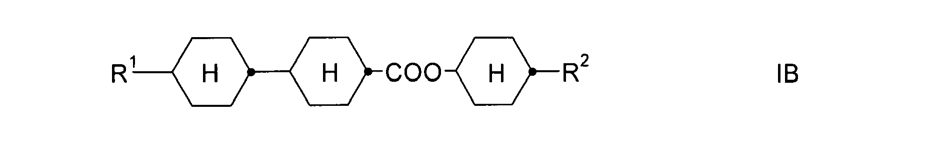 worin
R¹ und R² jeweils unabhängig voneinander einen Alkylrest mit 1 bis 12 Kohlenstoffatomen bedeuten, der unsubstituiert oder einfach durch CN oder CF₃ oder mindestens einfach durch Halogen substituiert ist, worin eine oder mehrere CH₂-Gruppen gegebenenfalls jeweils unabhängig voneinander so durch -O-, -S-, 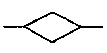 , -CH=CH-, -C≡C-, -CO-, -CO-O-, -O-CO- oder -O-CO-O- ersetzt sind, dass O-Atome nicht direkt miteinander verknüpft sind,
Y¹ H oder F bedeutet,
X F, Cl oder einen halogenierten Alkyl-, Alkenyl-, Alkoxy- oder Alkenyloxyrest mit bis zu 6 Kohlenstoffatomen bedeutet und
worin das Medium keine Verbindungen enthält, die eine Cyanogruppe enthalten.

2. Medium nach Anspruch 1, **dadurch gekennzeichnet, dass** es eine oder mehrere Verbindungen der folgenden Formeln 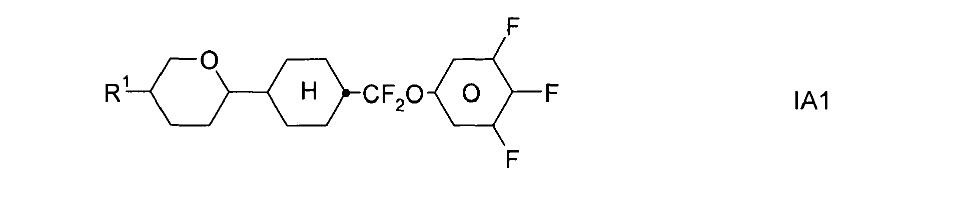 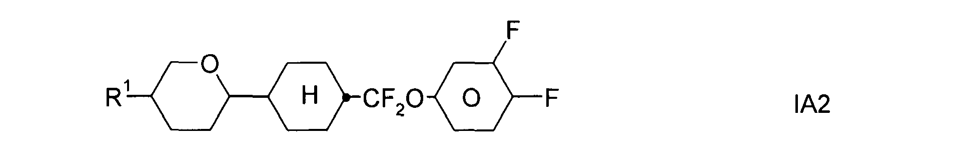 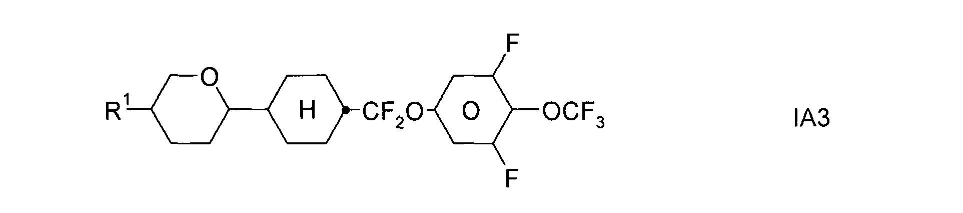 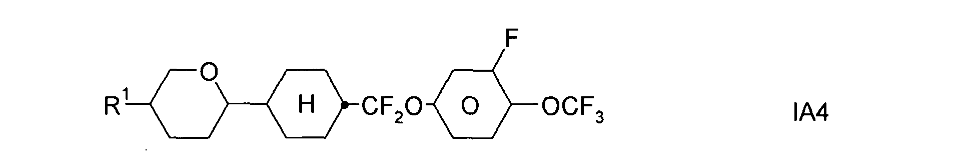 enthält, worin R¹ die in Anspruch 1 angegebene Bedeutung besitzt.

3. Medium nach Anspruch 1 oder 2, **dadurch gekennzeichnet, dass** es zusätzlich eine oder mehrere Verbindungen ausgewählt aus der Gruppe bestehend aus den allgemeinen Formeln II, III, IV, V, VI und VII 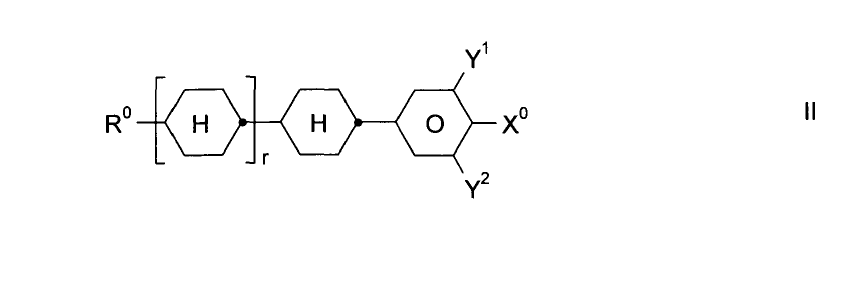 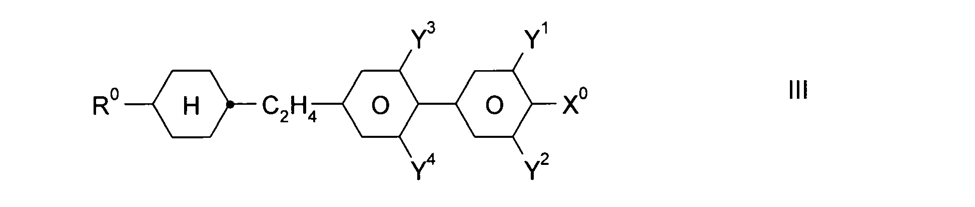 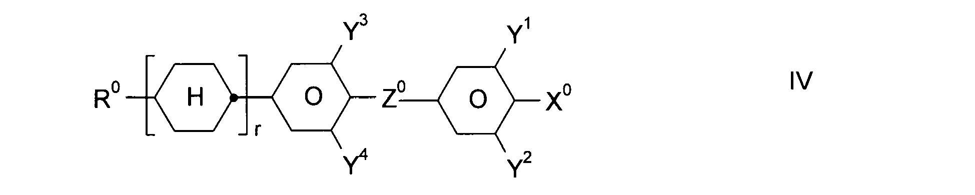 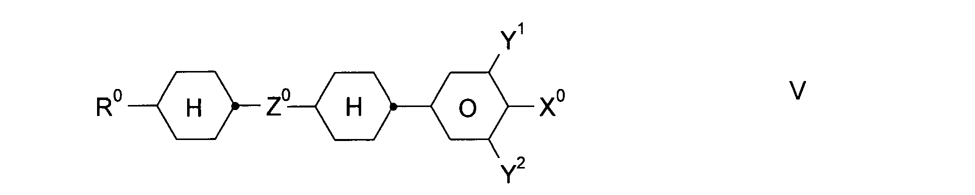 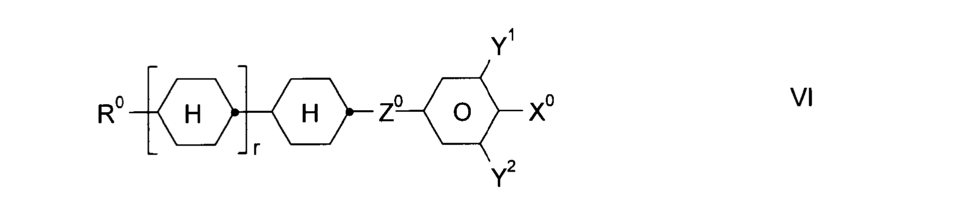 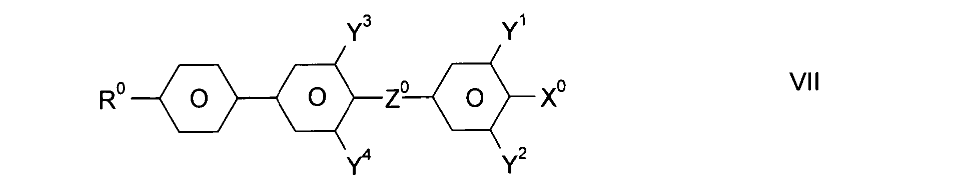 enthält, in denen die einzelnen Reste die folgenden Bedeutungen besitzen:
R⁰: n-Alkyl, Alkoxy, Oxaalkyl, Fluoralkyl oder Alkenyl, jeweils mit bis zu 9 Kohlenstoffatomen,
X⁰: F, Cl, halogeniertes Alkyl, halogeniertes Alkenyl, halogeniertes Alkenyloxy oder halogeniertes Alkoxy mit 1 bis 6 Kohlenstoffatomen,
Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -OCF₂- oder -CF₂O-,
Y¹ bis Y⁴: jeweils unabhängig voneinander H oder F,
r: 0 oder 1.

4. Medium nach mindestens einem der Ansprüche 1 bis 3, **dadurch gekennzeichnet, dass** es zusätzlich eine oder mehrere Verbindungen der folgenden Formel 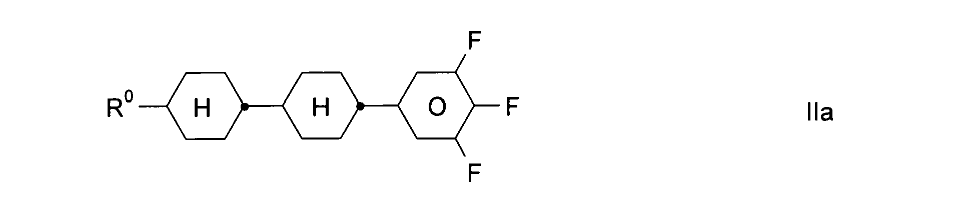 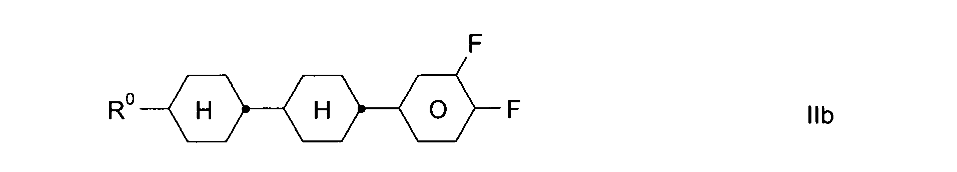 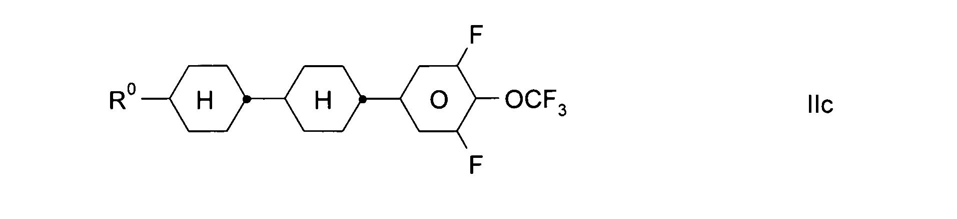 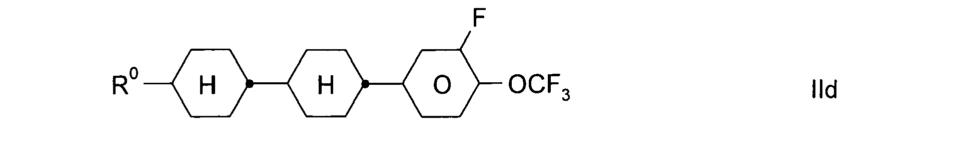 enthält, worin R⁰ die in Anspruch 3 angegebene Bedeutung besitzt.

5. Medium nach mindestens einem der Ansprüche 1 bis 4, **dadurch gekennzeichnet, dass** es zusätzlich eine oder mehrere Verbindungen der folgenden Formel 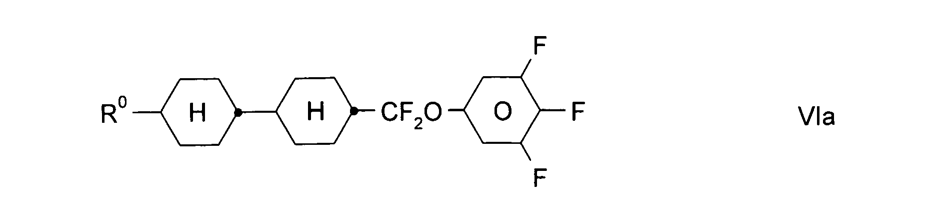 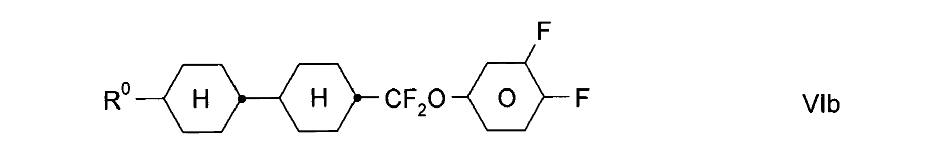 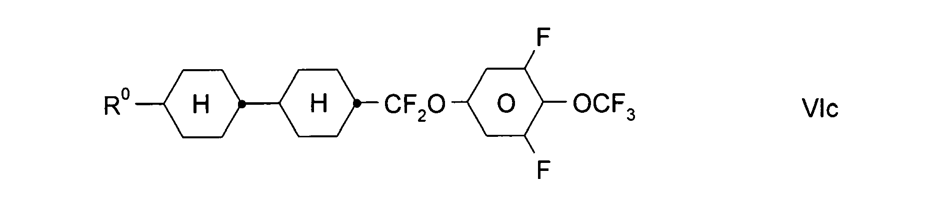 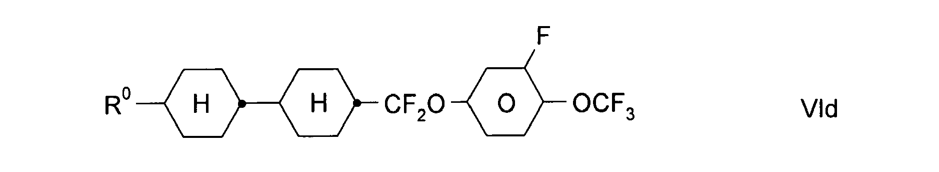 enthält, worin R⁰ die in Anspruch 3 angegebene Bedeutung besitzt.

6. Medium nach mindestens einem der Ansprüche 1 bis 5, **dadurch gekennzeichnet, dass** es zusätzlich eine oder mehrere Verbindungen der folgenden Formel 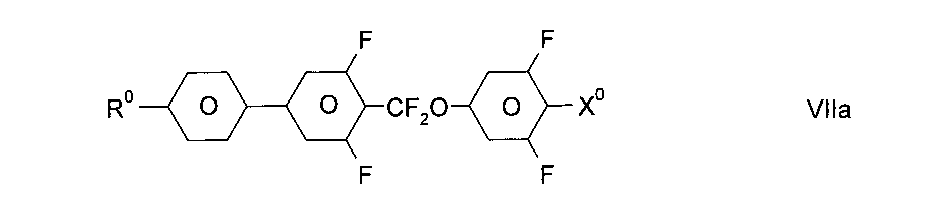 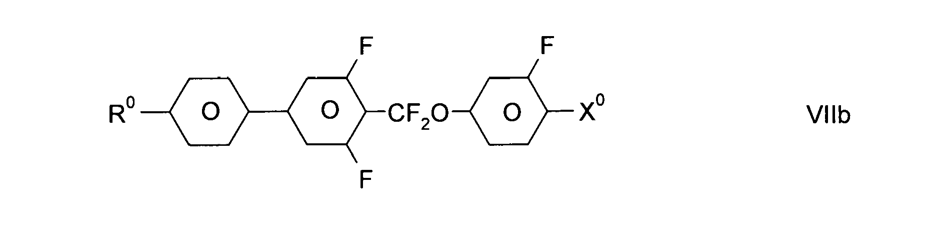 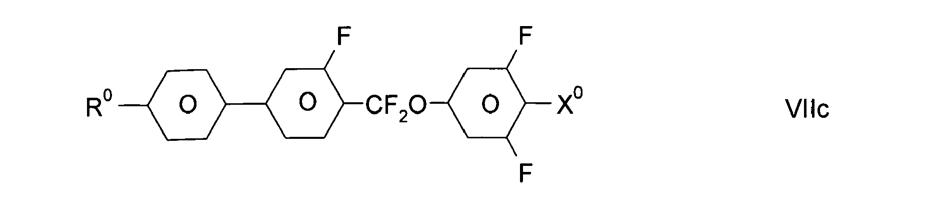 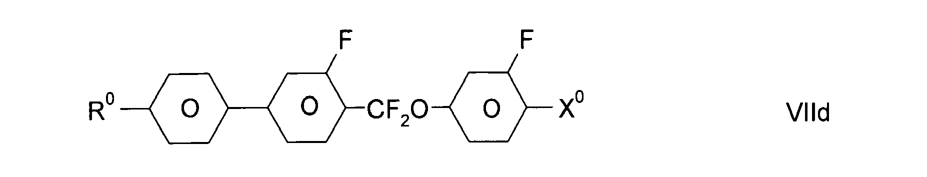 enthält, worin X⁰ und R⁰ die in Formel II angegebene Bedeutung besitzen und X⁰ vorzugsweise F oder OCF₃ bedeutet, besonders bevorzugt sind Verbindungen der Formel Vlla.

7. Medium nach mindestens einem der Ansprüche 1 bis 6, **dadurch gekennzeichnet, dass** es zusätzlich eine oder mehrere Verbindungen der folgenden Formel 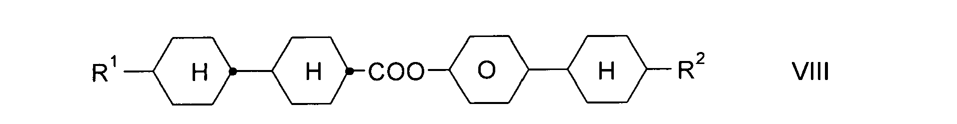 enthält, worin R¹ und R² wie in Anspruch 1 definiert sind.

8. Medium nach mindestens einem der Ansprüche 1 bis 7, **dadurch gekennzeichnet, dass** es eine oder mehrere Verbindungen der Formel IA, IB, IIa, VIa, Vlla und VIII und gegebenenfalls eine oder mehrere Verbindungen der Formel IVa, Vlb und XIX enthält.

9. Medium nach mindestens einem der Ansprüche 1 bis 8, **dadurch gekennzeichnet, dass** es
- 1-40 Gew.-% an Verbindungen der Formel IA,
- 1-15 Gew.-% an Verbindungen der Formel IB,
- 10-50 Gew.-% an Verbindungen der Formel II,
- 10-50 Gew.-% an Verbindungen der Formel VI,
- 10-40 Gew.-% an Verbindungen der Formel VII enthält.

10. Elektrooptische Flüssigkristallanzeige enthaltend ein Flüssigkristallmedium nach mindestens einem der Ansprüche 1 bis 9.

11. Verfahren zur Herstellung eines Mediums nach einem oder mehreren der Ansprüche 1 bis 9, bei dem man eine oder mehrere Verbindungen der Formel IA und IB wie in Anspruch 1 definiert mit einer oder mehreren Verbindungen wie in einem oder mehreren der Ansprüche 3 bis 7 definiert oder mit einer oder mehreren weiteren Flüssigkristallverbindungen und/oder Zusatzstoffen mischt.

## Revendications

1. Milieu de cristal liquide comprenant un ou plusieurs composés de la formule IA et un ou plusieurs composés de la formule IB 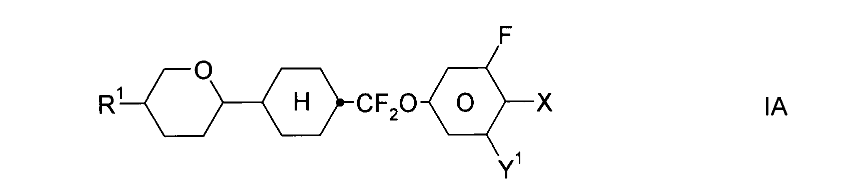 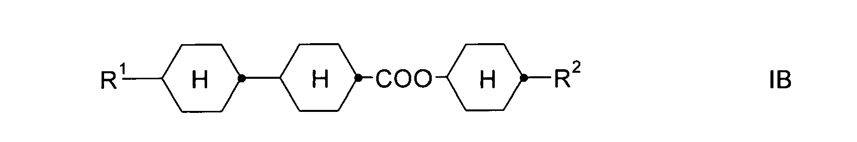 dans lequel
R¹ et R² sont chacun, indépendamment l'un de l'autre, un radical alkyle ayant de 1 à 12 atomes de carbone qui est non substitué, monosubstitué par CN ou CF₃ ou au moins monosubstitué par halogène, dans lequel un ou plusieurs groupes CH₂ sont optionnellement, dans chaque cas indépendamment l'un de l'autre, remplacés par -O-, -S-, 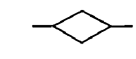 , -CH=CH-, -C≡C-, -CO-, -CO-O-, -O-CO- ou -O-CO-O- de telle sorte que des atomes de O ne soient pas liés directement l'un à l'autre,
Y¹ est H ou F,
X est F, Cl ou un radical alkyle, alkényle, alcoxy ou alkényloxy halogéné ayant jusqu'à 6 atomes de carbone, et
dans lequel le milieu ne contient pas de composé comprenant un groupe cyano.

2. Milieu selon la revendication 1, **caractérisé en ce qu'**il comprend un ou plusieurs composés des formules suivantes 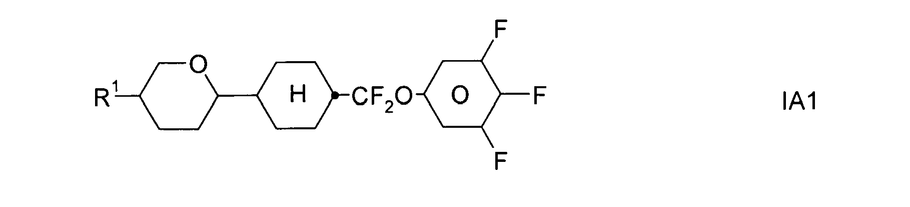 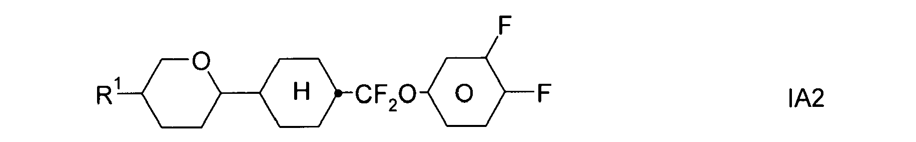 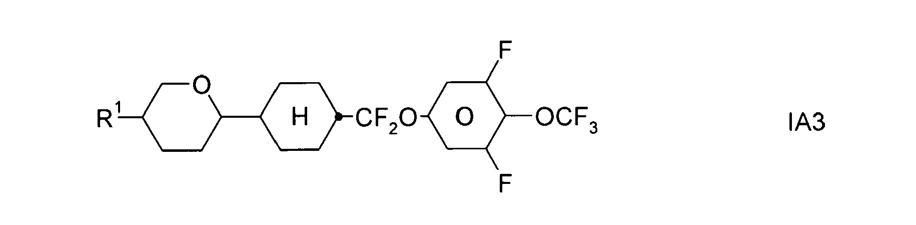 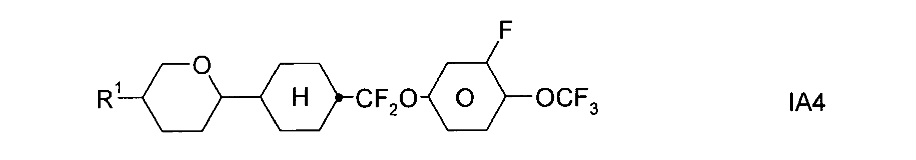 dans lequel R¹ a la signification donnée dans la revendication 1.

3. Milieu selon la revendication 1 ou 2, **caractérisé en ce qu'**il comprend additionnellement un ou plusieurs composés choisis parmi le groupe constitué des formules générales II, III, IV, V, VI et VII 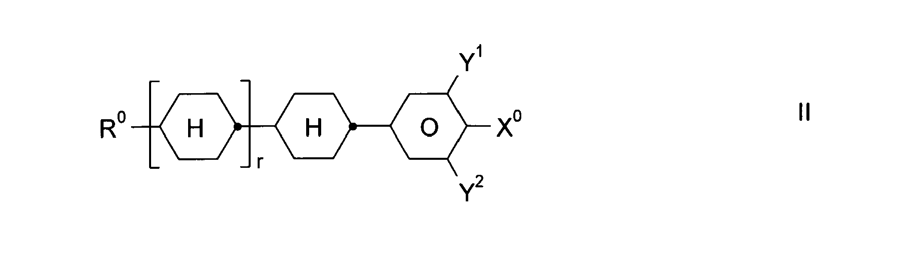 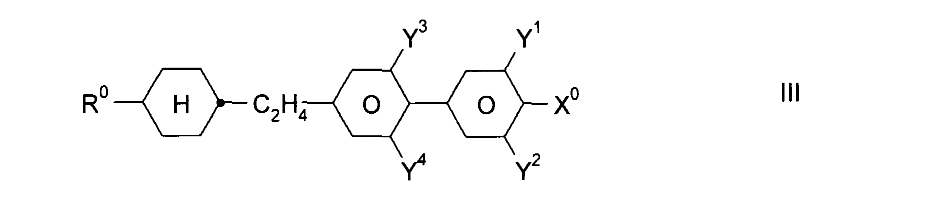 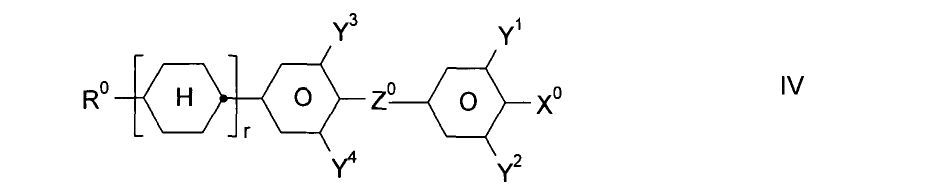 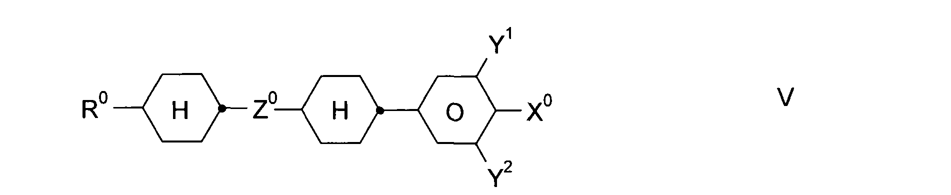 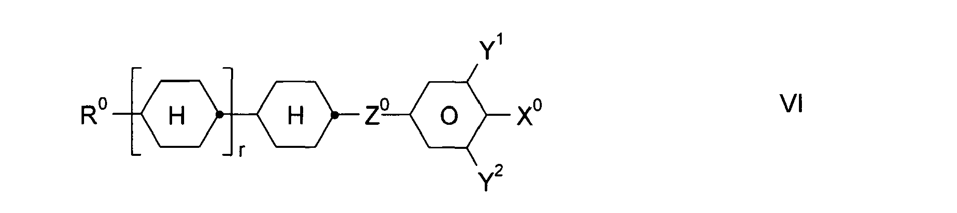 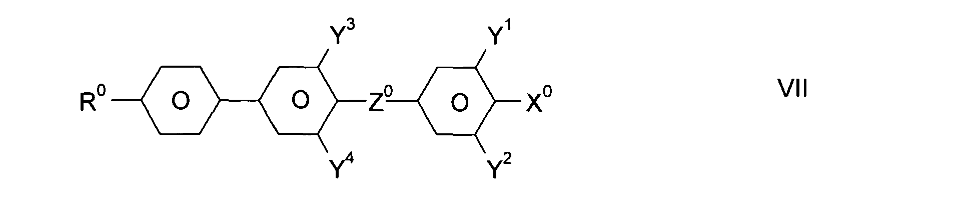 dans lequel les radicaux individuels ont les significations suivantes :
R⁰: n-alkyle, alcoxy, oxaalkyle, fluoroalkyle ou alkényle, chacun ayant jusqu'à 9 atomes de carbone,
X⁰: F, Cl, alkyle halogéné, alkényle halogéné, alkényloxy halogéné ou alcoxy halogéné ayant de 1 à 6 atomes de carbone,
Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -OCF₂- ou -CF₂O-,
Y¹ à Y⁴: chacun indépendamment les uns des autres, H ou F,
r: 0 ou 1;

4. Milieu selon au moins l'une des revendications 1 à 3, **caractérisé en ce qu'**il comprend additionnellement un ou plusieurs composés de la formule suivante 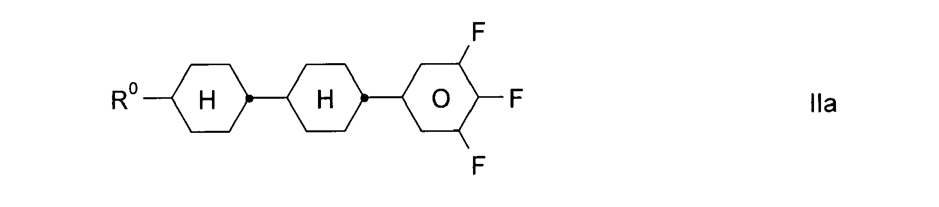 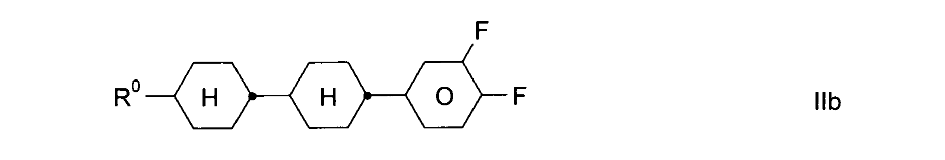 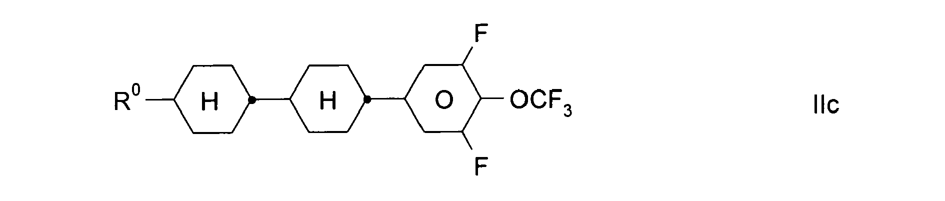 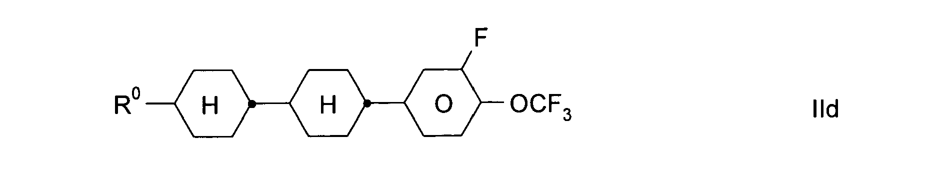 dans lequel R⁰ a la signification donnée dans la revendication 3.

5. Milieu selon au moins l'une des revendications 1 à 4, **caractérisé en ce qu'**il comprend additionnellement un ou plusieurs composés de la formule suivante 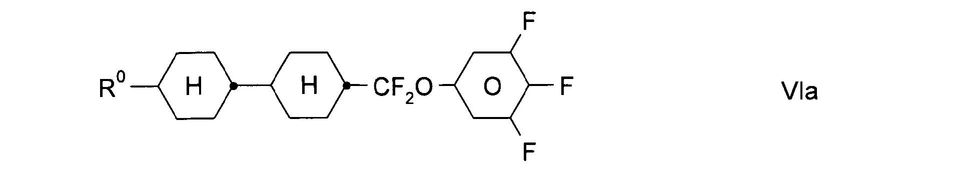 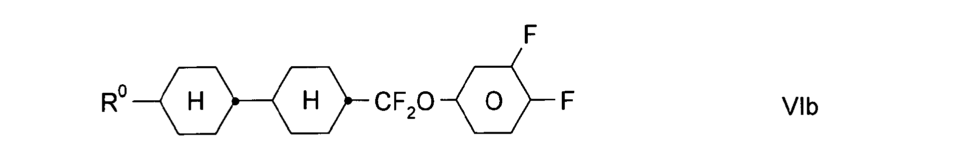 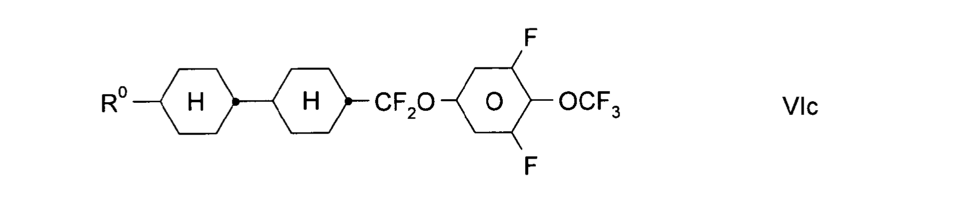 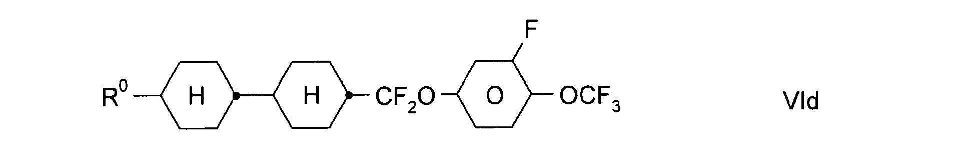 dans lequel R⁰ a la signification donnée dans la revendication 3.

6. Milieu selon au moins l'une des revendications 1 à 5, **caractérisé en ce qu'**il comprend additionnellement un ou plusieurs composés de la formule suivante 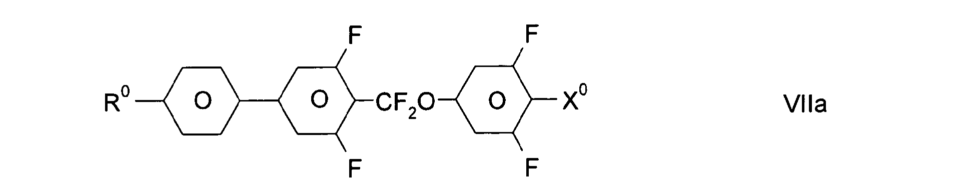 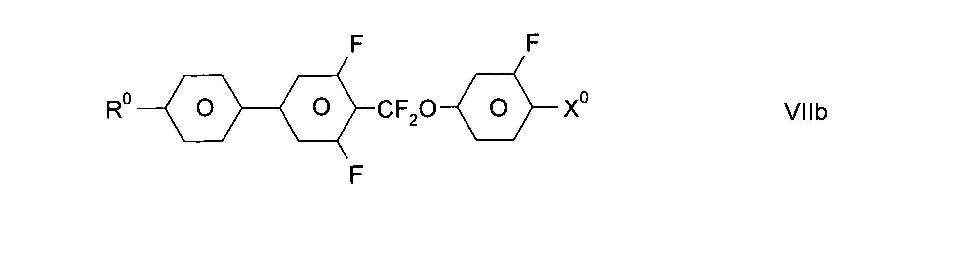 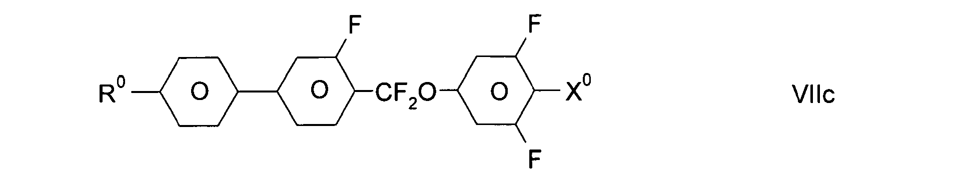 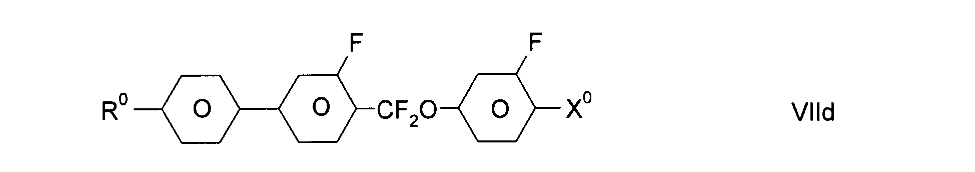 dans lequel X⁰ et R⁰ ont la signification donnée dans la formule II et X⁰ est de préférence F ou OCF₃, spécialement préférés sont les composés de la formule VIIa.

7. Milieu selon au moins l'une des revendications 1 à 6, **caractérisé en ce qu'**il comprend additionnellement un ou plusieurs composés de la formule suivante 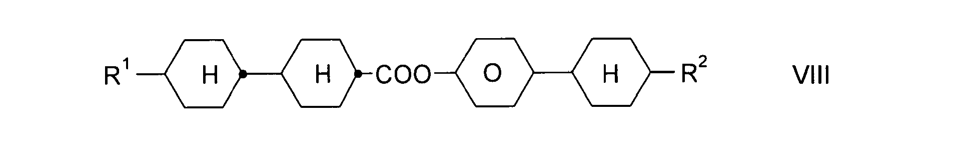 dans laquelle R¹ et R² sont comme définis dans la revendication 1.

8. Milieu selon au moins l'une des revendications 1 à 7, **caractérisé en ce qu'**il comprend un ou plusieurs composés de la formule IA, IB, IIa, VIa, VIIa et VIII, et optionnellement un ou plusieurs composés de la formule IVa, Vlb et XIX.

9. Milieu selon au moins l'une des revendications 1 à 8, **caractérisé en ce qu'**il comprend
- 1-40% en poids de composés de la formule IA,
- 1-15% en poids de composés de la formule IB,
- 10-50% en poids de composés de la formule II,
- 10-50% en poids de composés de la formule VI,
- 10-40% en poids de composés de la formule VII.

10. Affichage à cristaux liquides électro-optique contenant un milieu de cristal liquide selon au moins l'une des revendications 1 à 9.

11. Procédé de préparation d'un milieu selon une ou plusieurs des revendications 1 à 9, en mélangeant un ou plusieurs composés de la formule IA et IB comme définis dans la revendication 1 avec un ou plusieurs composés comme définis dans une ou plusieurs des revendications 3 à 7 ou avec un ou plusieurs autres composés de cristal liquide et/ou additifs.
